# EUROPEAN PATENT APPLICATION

(11) **EP 4 838 943 A1**
(43) Date of publication of application: **11.11.2026**
(21) Application number: 25751544.5
(22) Date of filing: 06.02.2025
(51) Int. Cl.: H04W 24/08

(54) **METHOD AND APPARATUS FOR CSI MEASUREMENT IN NODE USED FOR WIRELESS COMMUNICATION**

(30) Priority: 07.02.2024 CN 202410176273
(71) Applicant: Honor Device Co., Ltd., Shenzhen, Guangdong 518040 (CN)
(72) Inventor: WU, Lu, Shenzhen, Guangdong 518040 (CN); ZHANG, Xiaobo, Shenzhen, Guangdong 518040 (CN)
(74) Representative: Isarpatent
(86) International application number: PCT/CN2025/075898
(87) International publication number: WO 2025/167945

(57) **Abstract**

This application discloses a CSI measurement method and apparatus in a node used for wireless communication. A first node receives a first CSI reporting configuration, where the first CSI reporting configuration indicates a first CSI-RS resource set for channel measurement; receives first signaling; receives some or all CSI-RSs in the first CSI-RS resource set; and sends first CSI. The first signaling is used to trigger the first CSI, and the first CSI is CSI for P ports configured by the first CSI reporting configuration. The first CSI-RS resource set belongs to at least one time unit in time domain, and the at least one time unit depends on a time domain resource occupied by the first signaling and at least one triggering offset. The at least one triggering offset depends on whether P is greater than a quantity of ports of any CSI-RS resource in the first CSI-RS resource set.

## Description

This application claims priority to Chinese Patent Application No. 202410176273.5, filed with the China National Intellectual Property Administration on February 07, 2024 and entitled "CSI MEASUREMENT METHOD AND APPARATUS IN NODE USED FOR WIRELESS COMMUNICATION", which is incorporated herein by reference in its entirety.

### TECHNICAL FIELD

This application relates to a transmission method and apparatus in a wireless communication system, and in particular, to a CSI (Channel State Information, channel state information) measurement solution and apparatus in a wireless communication system.

### BACKGROUND

In a wireless communication system supporting MIMO (Multiple-Input Multiple-Output, multiple-input multiple-output), it is a common technology for a UE (User Equipment, user equipment) to generate and feed back CSI (Channel Status Information, channel state information) based on channel and/or interference measurement to assist a base station in performing multi-antenna processing. In a 5G (the 5th generation, the 5th generation) NR (new radio, new radio) system, in order for a base station to obtain accurate CSI, the base station configures NZP (Non-Zero Power, non-zero power) CSI-RS (Channel state information reference signal, channel state information reference signal) resources for channel measurement and CSI-IM (Channel State Information-Interference Measurement, channel state information-interference measurement) resources for interference measurement for a UE. In addition, NZP CSI-RS resources for interference measurement can be further configured. In existing 3GPP Release (Release) 18 and earlier standards, a quantity of ports of one CSI-RS resource for channel measurement configured by the base station for the UE is a quantity of ports for CSI fed back.

To address coverage and to achieve greater spectral efficiency, a larger antenna array with more antennas has attracted great interest in the industry. To this end, the "NR MIMO Phase 5" work item (Work Item, WI) was approved at 3GPP (the 3rd Generation Partnership Project, the 3rd Generation Partnership Project) RAN meeting #94. A design of CSI measurement and reporting for a larger quantity of CSI-RS ports (up to 128) is a key issue to be addressed.

In addition, for future communication systems (such as 6G), using an ultra-large antenna array is also an effective technology to address coverage and improve spectral efficiency. How to design CSI measurement and reporting for an ultra-large quantity of CSI-RS ports (a maximum value is equal to or greater than 128) is a key issue to be addressed.

### SUMMARY

In an existing system, CSI reporting and a CSI-RS for channel measurement can be triggered by signaling, and determining a slot in which the triggered CSI-RS is located is a key issue. For different cases of a quantity of ports for CSI, how to determine a time domain location of a triggered CSI-RS needs to be reconsidered.

To address the foregoing issues, this application discloses a solution. It should be noted that although a 5G network is used as an example in the foregoing description, this application is also applicable to a future network (such as 6G) or another scenario facing a similar problem (for example, a scenario in which a link direction changes, or another scenario supporting multi-level configuration of transmission directions, or a base station or user equipment with a stronger capability, such as a scenario supporting in-band full duplex, or for different application scenarios, such as mobile broadband, ultra-reliable low latency communication, massive machine type communication, a non-terrestrial network, an integrated sensing and communication network, an intelligent metasurface, and a terahertz network, a similar technical effect can also be achieved). In addition, using a unified solution for different networks or different scenarios (including but not limited to scenarios of the mobile broadband, the ultra-reliable low latency communication, the massive machine type communication, the non-terrestrial network, the integrated sensing and communication network, the intelligent metasurface, and the terahertz network) further helps reduce hardware complexity and costs. In a case of no conflict, embodiments in any node of this application and features in the embodiments may be applied to any other node, and vice versa. In a case of no conflict, the embodiments of this application and the features in the embodiments may be arbitrarily combined with each other.

This application discloses a method in a first node used for wireless communication, including:
receiving a first CSI reporting configuration, where the first CSI reporting configuration indicates a first CSI-RS resource set for channel measurement, and the first CSI-RS resource set includes a plurality of CSI-RS resources; the first CSI reporting configuration is used to configure CSI reporting for P ports, where P is a positive integer greater than 1;
receiving first signaling;
receiving some or all CSI-RSs in the first CSI-RS resource set; and
sending first CSI, where the first signaling is used to trigger the first CSI, and the first CSI is the CSI for P ports configured by the first CSI reporting configuration, where
the first CSI-RS resource set belongs to at least one time unit in time domain, and the at least one time unit depends on a time domain resource occupied by the first signaling and at least one triggering offset; and the at least one triggering offset depends on whether P is greater than a quantity of ports of any CSI-RS resource in the first CSI-RS resource set.

In an embodiment, an issue to be addressed by this application includes: for different cases of a quantity of ports for CSI, how to determine at least one time unit to which a triggered CSI-RS resource belongs in time domain.

In an embodiment, in the foregoing method, the at least one time unit to which the triggered CSI-RS resource belongs in time domain is flexibly adjusted based on a relationship between the quantity of ports for the CSI and a quantity of ports of the CSI-RS resource.

In an embodiment, in the foregoing method, the at least one time unit to which the triggered CSI-RS resource belongs in time domain depends on at least one triggering offset; and the at least one triggering offset is flexibly adjusted based on the relationship between the quantity of ports for the CSI and the quantity of ports of the CSI-RS resource.

In an embodiment, an advantage of using the foregoing method is that not only a case in which the quantity of ports for the CSI is equal to the quantity of ports of the configured CSI-RS resource in the current standard is supported, but also a case in which the quantity of ports for the CSI is greater than the quantity of ports of the configured CSI-RS resource is supported.

In an embodiment, an advantage of using the foregoing method is that a system design is simplified.

In an embodiment, an advantage of using the foregoing method is that compatibility with the standard is good and a modification to the standard is slight.

In an embodiment, an advantage of using the foregoing method is that a CSI-RS resource is properly allocated.

In an embodiment, an advantage of using the foregoing method is that accuracy of CSI is improved.

In an embodiment, an advantage of using the foregoing method is that transmission efficiency is improved.

In an embodiment, an advantage of using the foregoing method is that a transmission capacity is increased.

In an embodiment, an advantage of using the foregoing method is that system performance is improved.

According to one aspect of this application, when P is equal to a quantity of ports of one CSI-RS resource in the first CSI-RS resource set, the first CSI indicates a first CSI-RS resource, where the first CSI-RS resource is one CSI-RS resource in the first CSI-RS resource set; when P is greater than a quantity of ports of any CSI-RS resource in the first CSI-RS resource set, the first CSI indicates a first CSI-RS resource group, where the first CSI-RS resource group includes a plurality of CSI-RS resources in the first CSI-RS resource set, and a total quantity of ports of all CSI-RS resources in the first CSI-RS resource group is equal to P.

In an embodiment, an advantage of using the foregoing method is that a design of a CSI-RS resource is simplified.

In an embodiment, an advantage of using the foregoing method is that designing a CSI-RS resource with a larger quantity of ports (such as 128 or more) is avoided, but measurement and reporting of CSI with a larger quantity of ports (such as 128 or more) are achieved.

In an embodiment, an advantage of using the foregoing method is that combining a plurality of CSI-RS resources into one CSI-RS resource with a larger quantity of ports (such as 128 or more) for measuring channel information with a larger quantity of ports (for example, up to 128 or larger than 128) is supported.

In an embodiment, an advantage of using the foregoing method is that a system design is simplified.

In an embodiment, an advantage of using the foregoing method is that compatibility with the standard is good and a modification to the standard is slight.

In an embodiment, an advantage of using the foregoing method is that accuracy of CSI is improved.

In an embodiment, an advantage of using the foregoing method is that transmission efficiency is improved.

In an embodiment, an advantage of using the foregoing method is that a transmission capacity is increased.

In an embodiment, an advantage of using the foregoing method is that system performance is improved.

According to one aspect of this application, the at least one triggering offset depending on whether P is greater than the quantity of ports of any CSI-RS resource in the first CSI-RS resource set includes: When P is equal to the quantity of ports of one CSI-RS resource in the first CSI-RS resource set, the at least one triggering offset is a first triggering offset; when P is greater than the quantity of ports of any CSI-RS resource in the first CSI-RS resource set, the at least one triggering offset is a second triggering offset.

In an embodiment, an advantage of using the foregoing method is that not only a case in which the quantity of ports for the CSI is equal to the quantity of ports of the configured CSI-RS resource in the current standard is supported, but also a case in which the quantity of ports for the CSI is greater than the quantity of ports of the configured CSI-RS resource is supported.

In an embodiment, an advantage of using the foregoing method is that a system design is simplified.

In an embodiment, an advantage of using the foregoing method is that compatibility with the standard is good and a modification to the standard is slight.

According to one aspect of this application, the at least one triggering offset depending on whether P is greater than the quantity of ports of any CSI-RS resource in the first CSI-RS resource set includes: When P is equal to the quantity of ports of one CSI-RS resource in the first CSI-RS resource set, the at least one triggering offset is one triggering offset; when P is greater than the quantity of ports of any CSI-RS resource in the first CSI-RS resource set, the at least one triggering offset includes Q triggering offsets, where Q is a positive integer greater than 1.

In an embodiment, an advantage of using the foregoing method is that not only a case in which the quantity of ports for the CSI is equal to the quantity of ports of the configured CSI-RS resource in the current standard is supported, but also a case in which the quantity of ports for the CSI is greater than the quantity of ports of the configured CSI-RS resource is supported.

In an embodiment, an advantage of using the foregoing method is that flexibility is high and a system design is simplified.

In an embodiment, an advantage of using the foregoing method is that a CSI-RS resource is properly allocated.

According to one aspect of this application, when P is greater than the quantity of ports of any CSI-RS resource in the first CSI-RS resource set, the first CSI-RS resource set includes Q CSI-RS resource groups, where any CSI-RS resource group in the Q CSI-RS resource groups includes a plurality of CSI-RS resources in the first CSI-RS resource set, a total quantity of ports of all CSI-RS resources in any CSI-RS resource group in the Q CSI-RS resource groups is equal to P, the at least one time unit includes time units to which the Q CSI-RS resource groups respectively belong in time domain, and the time units to which the Q CSI-RS resource groups respectively belong in time domain respectively depend on the Q triggering offsets.

In an embodiment, an advantage of using the foregoing method is that a case in which the quantity of ports for the CSI is greater than the quantity of ports of the configured CSI-RS resource is supported.

In an embodiment, an advantage of using the foregoing method is that flexibility is high and a system design is simplified.

In an embodiment, an advantage of using the foregoing method is that a plurality of CSI-RS resource groups are properly allocated.

According to one aspect of this application, the at least one triggering offset depending on whether P is greater than the quantity of ports of any CSI-RS resource in the first CSI-RS resource set includes: When P is equal to the quantity of ports of one CSI-RS resource in the first CSI-RS resource set, the at least one triggering offset is one triggering offset; when P is greater than the quantity of ports of any CSI-RS resource in the first CSI-RS resource set, the at least one triggering offset includes M triggering offsets, where M is a positive integer greater than 1, the first CSI-RS resource set includes M CSI-RS resources, the at least one time unit includes time units to which the M CSI-RS resources respectively belong in time domain, and the time units to which the M CSI-RS resources respectively belong in time domain respectively depend on the M triggering offsets.

In an embodiment, an advantage of using the foregoing method is that flexibility is high.

In an embodiment, an advantage of using the foregoing method is that a plurality of CSI-RS resources are properly allocated.

According to one aspect of this application, a reference CSI-RS resource is one CSI-RS resource in the first CSI-RS resource set, the reference CSI-RS resource belongs to a reference time unit in time domain, and the at least one time unit includes the reference time unit; and the reference time unit depends on the time domain resource occupied by the first signaling and a reference triggering offset, and the at least one triggering offset includes the reference triggering offset.

In an embodiment, an advantage of using the foregoing method is that a system design is simplified.

In an embodiment, an advantage of using the foregoing method is that compatibility with the standard is good.

This application discloses a method in a second node used for wireless communication, including:
sending a first CSI reporting configuration, where the first CSI reporting configuration indicates a first CSI-RS resource set for channel measurement, and the first CSI-RS resource set includes a plurality of CSI-RS resources; the first CSI reporting configuration is used to configure CSI reporting for P ports, where P is a positive integer greater than 1;
sending first signaling;
sending some or all CSI-RSs in the first CSI-RS resource set; and
receiving first CSI, where the first signaling is used to trigger the first CSI, and the first CSI is the CSI for P ports configured by the first CSI reporting configuration, where
the first CSI-RS resource set belongs to at least one time unit in time domain, and the at least one time unit depends on a time domain resource occupied by the first signaling and at least one triggering offset; and the at least one triggering offset depends on whether P is greater than a quantity of ports of any CSI-RS resource in the first CSI-RS resource set.

According to one aspect of this application, when P is equal to a quantity of ports of one CSI-RS resource in the first CSI-RS resource set, the first CSI indicates a first CSI-RS resource, where the first CSI-RS resource is one CSI-RS resource in the first CSI-RS resource set; when P is greater than a quantity of ports of any CSI-RS resource in the first CSI-RS resource set, the first CSI indicates a first CSI-RS resource group, where the first CSI-RS resource group includes a plurality of CSI-RS resources in the first CSI-RS resource set, and a total quantity of ports of all CSI-RS resources in the first CSI-RS resource group is equal to P.

According to one aspect of this application, the at least one triggering offset depending on whether P is greater than the quantity of ports of any CSI-RS resource in the first CSI-RS resource set includes: When P is equal to the quantity of ports of one CSI-RS resource in the first CSI-RS resource set, the at least one triggering offset is a first triggering offset; when P is greater than the quantity of ports of any CSI-RS resource in the first CSI-RS resource set, the at least one triggering offset is a second triggering offset.

According to one aspect of this application, the at least one triggering offset depending on whether P is greater than the quantity of ports of any CSI-RS resource in the first CSI-RS resource set includes: When P is equal to the quantity of ports of one CSI-RS resource in the first CSI-RS resource set, the at least one triggering offset is one triggering offset; when P is greater than the quantity of ports of any CSI-RS resource in the first CSI-RS resource set, the at least one triggering offset includes Q triggering offsets, where Q is a positive integer greater than 1.

According to one aspect of this application, when P is greater than the quantity of ports of any CSI-RS resource in the first CSI-RS resource set, the first CSI-RS resource set includes Q CSI-RS resource groups, where any CSI-RS resource group in the Q CSI-RS resource groups includes a plurality of CSI-RS resources in the first CSI-RS resource set, a total quantity of ports of all CSI-RS resources in any CSI-RS resource group in the Q CSI-RS resource groups is equal to P, the at least one time unit includes time units to which the Q CSI-RS resource groups respectively belong in time domain, and the time units to which the Q CSI-RS resource groups respectively belong in time domain respectively depend on the Q triggering offsets.

According to one aspect of this application, the at least one triggering offset depending on whether P is greater than the quantity of ports of any CSI-RS resource in the first CSI-RS resource set includes: When P is equal to the quantity of ports of one CSI-RS resource in the first CSI-RS resource set, the at least one triggering offset is one triggering offset; when P is greater than the quantity of ports of any CSI-RS resource in the first CSI-RS resource set, the at least one triggering offset includes M triggering offsets, where M is a positive integer greater than 1, the first CSI-RS resource set includes M CSI-RS resources, the at least one time unit includes time units to which the M CSI-RS resources respectively belong in time domain, and the time units to which the M CSI-RS resources respectively belong in time domain respectively depend on the M triggering offsets.

According to one aspect of this application, a reference CSI-RS resource is one CSI-RS resource in the first CSI-RS resource set, the reference CSI-RS resource belongs to a reference time unit in time domain, and the at least one time unit includes the reference time unit; and the reference time unit depends on the time domain resource occupied by the first signaling and a reference triggering offset, and the at least one triggering offset includes the reference triggering offset.

This application discloses a first node device used for wireless communication, including:
a first receiver, configured to receive a first CSI reporting configuration, where the first CSI reporting configuration indicates a first CSI-RS resource set for channel measurement, and the first CSI-RS resource set includes a plurality of CSI-RS resources; the first CSI reporting configuration is used to configure CSI reporting for P ports, where P is a positive integer greater than 1; receive first signaling; and receive some or all CSI-RSs in the first CSI-RS resource set; and
a first transmitter, configured to send first CSI, where the first signaling is used to trigger the first CSI, and the first CSI is the CSI for P ports configured by the first CSI reporting configuration, where
the first CSI-RS resource set belongs to at least one time unit in time domain, and the at least one time unit depends on a time domain resource occupied by the first signaling and at least one triggering offset; and the at least one triggering offset depends on whether P is greater than a quantity of ports of any CSI-RS resource in the first CSI-RS resource set.

This application discloses a second node device used for wireless communication, including:
a second transmitter, configured to send a first CSI reporting configuration, where the first CSI reporting configuration indicates a first CSI-RS resource set for channel measurement, and the first CSI-RS resource set includes a plurality of CSI-RS resources; the first CSI reporting configuration is used to configure CSI reporting for P ports, where P is a positive integer greater than 1; send first signaling; and send some or all CSI-RSs in the first CSI-RS resource set; and
a second receiver, configured to receive first CSI, where the first signaling is used to trigger the first CSI, and the first CSI is the CSI for P ports configured by the first CSI reporting configuration, where
the first CSI-RS resource set belongs to at least one time unit in time domain, and the at least one time unit depends on a time domain resource occupied by the first signaling and at least one triggering offset; and the at least one triggering offset depends on whether P is greater than a quantity of ports of any CSI-RS resource in the first CSI-RS resource set.

In an embodiment, compared with a conventional solution, this application has the following advantages.
- The triggering offset is flexibly adjusted based on a relationship between the quantity of ports for the CSI and the quantity of ports of the CSI-RS resource.
- A design of a CSI-RS resource is simplified.
- Designing a CSI-RS resource with a large quantity of ports (such as 128 or more) is avoided.
- Measurement and reporting of CSI with a larger quantity of ports (such as 128 or more) can be achieved when a maximum quantity of ports of a CSI-RS resource supported by the current standard is unchanged.
- Combining a plurality of CSI-RS resources into one CSI-RS resource with a larger quantity of ports (such as 128 or more) for measuring channel information with a larger quantity of ports (for example, up to 128 or larger than 128) is supported.
- A system design is simplified.
- Compatibility with the standard is good and a modification to the standard is slight.
- Accuracy of CSI is improved.
- Transmission efficiency is improved.
- A transmission capacity is increased.
- System performance is improved.

### BRIEF DESCRIPTION OF DRAWINGS

Other features, objectives, and advantages of this application become clearer by reading detailed descriptions of non-limiting embodiments with reference to the following drawings:
FIG. 1 is a flowchart of a first CSI reporting configuration, first signaling, a first CSI-RS resource set, and first CSI according to an embodiment of this application;
FIG. 2 is a schematic diagram of a network architecture according to an embodiment of this application;
FIG. 3 is a schematic diagram of an embodiment of a radio protocol architecture for a user plane and a control plane according to an embodiment of this application;
FIG. 4 is a schematic diagram of a first communication device and a second communication device according to an embodiment of this application;
FIG. 5 is a flowchart of wireless transmission according to an embodiment of this application;
FIG. 6 is a schematic diagram of a relationship between first CSI and P according to an embodiment of this application;
FIG. 7 is a schematic diagram of a relationship between at least one triggering offset and P according to an embodiment of this application;
FIG. 8 is a schematic diagram of a relationship between at least one triggering offset and P according to an embodiment of this application;
FIG. 9 is a schematic diagram of a relationship between at least one triggering offset and P according to another embodiment of this application;
FIG. 10 is a schematic diagram of a relationship between at least one time unit and at least one triggering offset according to an embodiment of this application;
FIG. 11 is a schematic diagram of a relationship between at least one time unit and at least one triggering offset according to another embodiment of this application;
FIG. 12 is a schematic diagram of a relationship between a reference CSI-RS resource, a reference time unit, and a reference triggering offset according to an embodiment of this application;
FIG. 13 is a structural block diagram of a processing apparatus used in a first node device according to an embodiment of this application; and
FIG. 14 is a structural block diagram of a processing apparatus used in a second node device according to an embodiment of this application.

### DESCRIPTION OF EMBODIMENTS

The technical solutions of this application are further described in detail below with reference to the accompanying drawings. It should be noted that, in a case of no conflict, embodiments of this application and features in the embodiments may be arbitrarily combined with each other.

### Embodiment 1

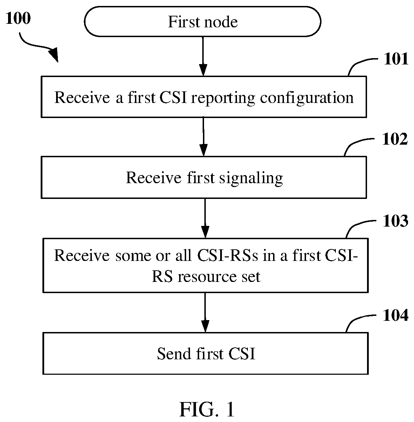

Embodiment 1 illustrates a flowchart of a first CSI reporting configuration, first signaling, a first CSI-RS resource set, and first CSI according to an embodiment of this application, as shown in FIG. 1. In 100 shown in FIG. 1, each block represents one step.

In Embodiment 1, a first node in this application receives a first CSI reporting configuration in step 101; receives first signaling in step 102; receives some or all CSI-RSs in the first CSI-RS resource set in step 103; and sends first CSI in step 104. The first CSI reporting configuration indicates a first CSI-RS resource set for channel measurement, and the first CSI-RS resource set includes a plurality of CSI-RS resources. The first CSI reporting configuration is used to configure CSI reporting for P ports, where P is a positive integer greater than 1. The first signaling is used to trigger the first CSI, and the first CSI is CSI for P ports configured by the first CSI reporting configuration. The first CSI-RS resource set belongs to at least one time unit in time domain, and the at least one time unit depends on a time domain resource occupied by the first signaling and at least one triggering offset. The at least one triggering offset depends on whether P is greater than a quantity of ports of any CSI-RS resource in the first CSI-RS resource set.

Typically, the CSI-RS in this application is an NZP CSI-RS.

Typically, any CSI-RS resource in the first CSI-RS (Channel state information reference signal, channel state information reference signal) resource set is an NZP (Non-Zero Power, non-zero power) CSI-RS resource.

In an embodiment, the first CSI (Channel Status Information, channel state information) reporting configuration is carried by higher layer signaling.

In an embodiment, the first CSI reporting configuration is carried by RRC signaling.

In an embodiment, the first CSI reporting configuration includes one IE (Information Element, information element).

In an embodiment, the first CSI reporting configuration includes one or more IEs.

In an embodiment, the first CSI reporting configuration is an IE CSI-ReportConfig.

In an embodiment, a name of the first CSI reporting configuration includes CSI-ReportConfig.

In an embodiment, the first CSI reporting configuration indicates one CSI resource configuration, and the one CSI resource configuration indicates the first CSI-RS resource set.

In a sub-embodiment of the foregoing embodiment, the one CSI resource configuration is one IE CSI-ResourceConfig.

In a sub-embodiment of the foregoing embodiment, the first CSI reporting configuration includes a resourcesForChannelMeasurement field, and the resourcesForChannelMeasurement field included in the first CSI reporting configuration indicates the one CSI resource configuration.

In a sub-embodiment of the foregoing embodiment, the first CSI reporting configuration includes a resourcesForChannelMeasurement field, and the resourcesForChannelMeasurement field included in the first CSI reporting configuration indicates an identifier or index of the one CSI resource configuration.

In an embodiment, the first CSI reporting configuration includes a resourcesForChannelMeasurement field, and the resourcesForChannelMeasurement field included in the first CSI reporting configuration indicates one CSI resource configuration, and the one CSI resource configuration indicates the first CSI-RS resource set.

In an embodiment, the first CSI-RS resource set is configured by an IE NZP-CSI-RS-ResourceSet.

In an embodiment, the IE NZP-CSI-RS-ResourceSet indicates an identifier or index of each CSI-RS resource included in the first CSI-RS resource set.

In an embodiment, an identifier or index of the first CSI reporting configuration is CSI-ReportConfigId.

In an embodiment, an identifier or index of one CSI-RS resource is NZP-CSI-RS-ResourceId.

In an embodiment, an identifier or index of the first CSI-RS resource set is NZP-CSI-RS-ResourceSetId.

In an embodiment, an identifier or index of one CSI resource configuration is CSI-ResourceConfigId.

In an embodiment, for specific definitions of the IE CSI-ReportConfig, the resourcesForChannelMeasurement, and the IE CSI-ResourceConfig, refer to Section 6.3.2 of 3GPP TS 38.331.

In an embodiment, the first CSI reporting configuration indicates a first CSI-RS resource set for channel measurement and a second RS resource set for interference measurement. The second RS resource set includes one or more CSI-IM (Channel State Information-Interference Measurement, channel state information-interference measurement) resources, or the second RS resource set includes one or more CSI-IM resources and one or more NZP CSI-RS resources for interference measurement.

Typically, CSI-IM is zero-power.

In an embodiment, the first CSI reporting configuration indicates two CSI resource configurations. The two CSI resource configurations respectively indicate a first CSI-RS resource set for channel measurement and a second RS resource set for interference measurement.

In an embodiment, the first CSI reporting configuration indicates two CSI resource configurations. The two CSI resource configurations respectively indicate a first CSI-RS resource set for channel measurement and a second RS resource set for interference measurement. The second RS resource set includes one or more CSI-IM resources.

In a sub-embodiment of the foregoing embodiment, the two CSI resource configurations are two IEs CSI-ResourceConfig.

In a sub-embodiment of the foregoing embodiment, the first CSI reporting configuration includes a resourcesForChannelMeasurement field and a csi-IM-ResourcesForInterference field, and the resourcesForChannelMeasurement field and the csi-IM-ResourcesForInterference field included in the first CSI reporting configuration respectively indicate the two CSI resource configurations.

In an embodiment, the first CSI reporting configuration includes a csi-IM-ResourcesForInterference field, and the csi-IM-ResourcesForInterference field included in the first CSI reporting configuration is used to indicate the second RS resource set.

In an embodiment, the first CSI reporting configuration indicates three CSI resource configurations. One CSI resource configuration in the three CSI resource configurations indicates a first CSI-RS resource set for channel measurement, and the other two CSI resource configurations in the three CSI resource configurations jointly indicate a second RS resource set for interference measurement. The second RS resource set includes one or more CSI-IM resources and one or more NZP CSI-RS resources for interference measurement.

In an embodiment, the first CSI reporting configuration indicates three CSI resource configurations. One CSI resource configuration in the three CSI resource configurations indicates a first CSI-RS resource set for channel measurement, and the other two CSI resource configurations in the three CSI resource configurations jointly indicate a second RS resource set for interference measurement. The other two CSI resource configurations respectively indicate a CSI-IM resource included in the second RS resource set and an NZP CSI-RS resource for interference measurement included in the second RS resource set.

In a sub-embodiment of the foregoing embodiment, the three CSI resource configurations are three IEs CSI-ResourceConfig.

In a sub-embodiment of the foregoing embodiment, the first CSI reporting configuration includes a resourcesForChannelMeasurement field, a csi-IM-ResourcesForInterference field, and an nzp-CSI-RS-ResourcesForInterference field. The resourcesForChannelMeasurement field, the csi-IM-ResourcesForInterference field, and the nzp-CSI-RS-ResourcesForInterference field included in the first CSI reporting configuration respectively indicate the three CSI resource configurations.

In an embodiment, the first CSI reporting configuration includes a csi-IM-ResourcesForInterference field and an nzp-CSI-RS-ResourcesForInterference field, and the csi-IM-ResourcesForInterference field and the nzp-CSI-RS-ResourcesForInterference field included in the first CSI reporting configuration jointly indicate the second RS resource set.

In an embodiment, for specific definitions of the IE CSI-ReportConfig, the resourcesForChannelMeasurement, the csi-IM-ResourcesForInterference, the nzp-CSI-RS-ResourcesForInterference, and the IE CSI-ResourceConfig, refer to Section 6.3.2 of 3GPP TS 38.331.

In an embodiment, the quantity of ports of one CSI-RS resource in the first CSI-RS resource set is a positive integer.

In an embodiment, the quantity of ports of one CSI-RS resource in the first CSI-RS resource set is a positive integer not greater than 32.

In an embodiment, the quantity of ports of one CSI-RS resource in the first CSI-RS resource set is a positive integer not greater than the first maximum integer.

In a sub-embodiment of the foregoing embodiment, the first maximum integer is 32.

In a sub-embodiment of the foregoing embodiment, the first maximum integer is 64.

In a sub-embodiment of the foregoing embodiment, the first maximum integer is less than 128.

In a sub-embodiment of the foregoing embodiment, the first maximum integer is a maximum quantity of ports of a CSI-RS resource supported by 3GPP Release 18.

In an embodiment, when P is greater than the quantity of ports of any CSI-RS resource in the first CSI-RS resource set, the first CSI reporting configuration indicates P.

In an embodiment, P is equal to the quantity of ports of one CSI-RS resource in the first CSI-RS resource set, or P is greater than the quantity of ports of any CSI-RS resource in the first CSI-RS resource set.

In an embodiment, P is equal to the quantity of ports of any CSI-RS resource in the first CSI-RS resource set, or P is greater than the quantity of ports of any CSI-RS resource in the first CSI-RS resource set.

In an embodiment, P is equal to the quantity of ports of one CSI-RS resource in the first CSI-RS resource set, or the first CSI reporting configuration indicates P, where P is greater than the quantity of ports of any CSI-RS resource in the first CSI-RS resource set.

In an embodiment, P is equal to the quantity of ports of any CSI-RS resource in the first CSI-RS resource set, or the first CSI reporting configuration indicates P, where P is greater than the quantity of ports of any CSI-RS resource in the first CSI-RS resource set.

In an embodiment, P depends on the first CSI reporting configuration.

In an embodiment, the first CSI reporting configuration indicates P.

In an embodiment, the first CSI reporting configuration explicitly or implicitly indicates P.

In an embodiment, P depends on whether the first CSI reporting configuration includes a first information block.

In an embodiment, whether the first CSI reporting configuration includes a first information block is used to determine whether P is greater than the quantity of ports of any CSI-RS resource in the first CSI-RS resource set. When the first CSI reporting configuration includes the first information block, P is greater than the quantity of ports of any CSI-RS resource in the first CSI-RS resource set; when the first CSI reporting configuration does not include the first information block, P is equal to the quantity of ports of one CSI-RS resource in the first CSI-RS resource set.

In an embodiment, whether the first CSI reporting configuration includes a first information block is used to determine a value range of P. When the first CSI reporting configuration includes the first information block, the value range of P is a first value range, and the first value range includes one or more positive integers; when the first CSI reporting configuration does not include the first information block, the value range of P is a second value range, and the second value range includes one or more positive integers. A maximum integer in the first value range is greater than a maximum integer in the second value range.

In an embodiment, a maximum value of P is greater than the maximum quantity of ports of a CSI-RS resource supported by 3GPP Release 18.

In an embodiment, the maximum value of P is not less than a maximum quantity of ports of a CSI-RS resource supported by 3GPP Release 19.

In an embodiment, the maximum value of P is greater than 32.

In an embodiment, the maximum value of P is greater than 64.

In an embodiment, the maximum value of P is equal to 128.

In an embodiment, the maximum value of P is greater than 128.

In an embodiment, whether the first CSI reporting configuration includes a first information block is used to determine whether the maximum value of P is greater than a first maximum integer, where the first maximum integer is a positive integer greater than 1. When the first CSI reporting configuration includes the first information block, the maximum value of P is greater than the first maximum integer; when the first CSI reporting configuration does not include the first information block, the maximum value of P is equal to the first maximum integer.

In a sub-embodiment of the foregoing embodiment, the first maximum integer is 32.

In a sub-embodiment of the foregoing embodiment, the first maximum integer is 64.

In a sub-embodiment of the foregoing embodiment, the first maximum integer is less than 128.

In a sub-embodiment of the foregoing embodiment, the first maximum integer is a maximum quantity of ports of a CSI-RS resource supported by 3GPP Release 18.

In a sub-embodiment of the foregoing embodiment, when the first CSI reporting configuration includes the first information block, the maximum value of P is equal to or greater than 128.

In an embodiment, the first CSI reporting configuration includes a first information block, and P depends on a value of the first information block.

In an embodiment, P depending on the value of the first information block includes: P is equal to the value of the first information block.

In an embodiment, P depending on the value of the first information block includes: Whether P is greater than the quantity of ports of any CSI-RS resource in the first CSI-RS resource set depends on the value of the first information block. When the value of the first information block is equal to a first candidate value, P is greater than the quantity of ports of any CSI-RS resource in the first CSI-RS resource set; when the value of the first information block is equal to a second candidate value, P is equal to the quantity of ports of one CSI-RS resource in the first CSI-RS resource set.

In an embodiment, P depending on the value of the first information block includes: The value range of P depends on the value of the first information block. When the value of the first information block is equal to the first candidate value, the value range of P is a first value range, and the first value range includes one or more positive integers; when the value of the first information block is equal to a second candidate value, the value range of P is a second value range, and the second value range includes one or more positive integers. A maximum integer in the first value range is greater than a maximum integer in the second value range.

In an embodiment, P depending on the value of the first information block includes: Whether the maximum value of P is greater than 32 depends on the value of the first information block. When the value of the first information block is equal to the first candidate value, and the maximum value of P is greater than a first maximum integer; when the value of the first information block is equal to a second candidate value, the maximum value of P is equal to the first maximum integer.

In a sub-embodiment of the foregoing embodiment, the first maximum integer is 32.

In a sub-embodiment of the foregoing embodiment, the first maximum integer is 64.

In a sub-embodiment of the foregoing embodiment, the first maximum integer is less than 128.

In a sub-embodiment of the foregoing embodiment, when the value of the first information block is equal to the first candidate value, the maximum value of P is equal to or greater than 128.

In an embodiment, the first information block includes one field in the first CSI reporting configuration.

In an embodiment, the first information block includes one or more fields in the first CSI reporting configuration.

In an embodiment, at least one field in the first CSI reporting configuration indicates the first information block.

In an embodiment, the IE CSI-ResourceConfig indicating the first CSI-RS resource set includes the first information block.

In an embodiment, the first CSI reporting configuration indicates one CSI resource configuration, the one CSI resource configuration indicates the first CSI-RS resource set, and the one CSI resource configuration includes the first information block.

In an embodiment, the IE NZP-CSI-RS-ResourceSet used to configure the first CSI-RS resource set includes the first information block.

In an embodiment, any CSI-RS resource in the first CSI-RS resource set is an aperiodic (aperiodic) CSI-RS resource, and the first signaling is DCI (Downlink control information, downlink control information) signaling that triggers the first CSI.

In an embodiment, any CSI-RS resource in the first CSI-RS resource set is a semi-persistent (semi-persistent) CSI-RS resource, and the first signaling is a MAC CE or DCI that triggers the first CSI.

In an embodiment, one or more fields in the first signaling are used to trigger the first CSI, and one field includes at least one bit.

In an embodiment, the first signaling includes a first field, the first field in the first signaling is used to trigger the first CSI, and the first field includes at least one bit.

In an embodiment, the first signaling includes a first field, the first field in the first signaling indicates a first trigger state (trigger state), the first trigger state indicates the first CSI reporting configuration, the first CSI is CSI for P ports configured by the first CSI reporting configuration, and the first field includes at least one bit.

In an embodiment, any CSI-RS resource in the first CSI-RS resource set is an aperiodic (aperiodic) CSI-RS resource, and the first signaling is DCI (Downlink control information, downlink control information) signaling that triggers the first CSI. The first signaling includes a first field, the first field in the first signaling is used to trigger the first CSI, and the first field includes at least one bit.

In an embodiment, any CSI-RS resource in the first CSI-RS resource set is an aperiodic (aperiodic) CSI-RS resource, and the first signaling is DCI (Downlink control information, downlink control information) signaling that triggers the first CSI. The first signaling includes a first field, the first field in the first signaling indicates a first trigger state (trigger state), the first trigger state indicates the first CSI reporting configuration, the first CSI is CSI for P ports configured by the first CSI reporting configuration, and the first field includes at least one bit.

In an embodiment, any CSI-RS resource in the first CSI-RS resource set is an aperiodic (aperiodic) CSI-RS resource, and the first signaling is DCI (Downlink control information, downlink control information) signaling that triggers the first CSI. The first signaling includes a CSI request field, the CSI request field in the first signaling is used to trigger the first CSI, and the CSI request field includes at least one bit.

In an embodiment, any CSI-RS resource in the first CSI-RS resource set is an aperiodic (aperiodic) CSI-RS resource, and the first signaling is DCI (Downlink control information, downlink control information) signaling that triggers the first CSI. The first signaling includes a CSI request field, the CSI request field in the first signaling indicates a first trigger state (trigger state), the first trigger state indicates the first CSI reporting configuration, the first CSI is CSI for P ports configured by the first CSI reporting configuration, and the CSI request field includes at least one bit.

In an embodiment, the first CSI reporting configuration indicates one CSI resource configuration, the one CSI resource configuration indicates the first CSI-RS resource set, and the one CSI resource configuration indicates that a resource type (resource type) of the first CSI-RS resource set is aperiodic (aperiodic).

In an embodiment, the first CSI reporting configuration indicates one CSI resource configuration, the one CSI resource configuration indicates the first CSI-RS resource set, and the one CSI resource configuration indicates that the first CSI-RS resource set is aperiodic (aperiodic).

In an embodiment, the first CSI reporting configuration indicates one CSI resource configuration, the one CSI resource configuration indicates the first CSI-RS resource set, and the one CSI resource configuration indicates that a resource type (resource type) of the first CSI-RS resource set is aperiodic (aperiodic) or semi-persistent (semi persistent).

In an embodiment, the first CSI reporting configuration indicates one CSI resource configuration, the one CSI resource configuration indicates the first CSI-RS resource set, and the one CSI resource configuration indicates that the first CSI-RS resource set is aperiodic (aperiodic) or semi-persistent (semi persistent).

In an embodiment, the at least one time unit is one time unit, and the at least one triggering offset (triggering offset) is one triggering offset.

In an embodiment, the at least one time unit is a plurality of time units, and the at least one triggering offset is one triggering offset.

In an embodiment, the at least one time unit is a plurality of time units, and the at least one triggering offset is a plurality of triggering offsets.

In an embodiment, the at least one time unit is a plurality of time units, the at least one triggering offset is a plurality of triggering offsets, and the plurality of time units respectively depend on the plurality of triggering offsets.

In an embodiment, the first CSI-RS resource set belonging to at least one time unit in time domain, and the at least one time unit depending on the time domain resource occupied by the first signaling and at least one triggering offset include: The first CSI-RS resource set belongs to at least one time unit in time domain, and the at least one time unit depends on a time unit to which the time domain resource occupied by the first signaling belongs and at least one triggering offset.

In an embodiment, the first CSI-RS resource set belonging to at least one time unit in time domain, and the at least one time unit depending on the time domain resource occupied by the first signaling and at least one triggering offset include: The first CSI-RS resource set belongs to at least one time unit in time domain, and the at least one time unit depends on a time unit to which an ending symbol of the time domain resource occupied by the first signaling belongs and at least one triggering offset.

In an embodiment, the first CSI-RS resource set belonging to at least one time unit in time domain, and the at least one time unit depending on the time domain resource occupied by the first signaling and at least one triggering offset include: The first CSI-RS resource set belongs to at least one time unit in time domain, and the at least one time unit depends on an ending symbol of the time domain resource occupied by the first signaling and at least one triggering offset.

In an embodiment, the first CSI-RS resource set belonging to at least one time unit in time domain, and the at least one time unit depending on the time domain resource occupied by the first signaling and at least one triggering offset include: The first CSI-RS resource set belongs to one time unit in time domain, and the one time unit to which the first CSI-RS resource set belongs in time domain depends on the time domain resource occupied by the first signaling and one triggering offset.

In an embodiment, the first CSI-RS resource set belonging to at least one time unit in time domain, and the at least one time unit depending on the time domain resource occupied by the first signaling and at least one triggering offset include: The first CSI-RS resource set belongs to a plurality of time units in time domain, and the plurality of time units depend on the time domain resource occupied by the first signaling and at least one triggering offset.

In an embodiment, the first CSI-RS resource set belonging to at least one time unit in time domain, and the at least one time unit depending on the time domain resource occupied by the first signaling and at least one triggering offset include: The first CSI-RS resource set includes Q CSI-RS resource groups, all CSI-RS resources in a same CSI-RS resource group in the Q CSI-RS resource groups belong to one time unit in time domain, time units to which the Q CSI-RS resource groups respectively belong in time domain respectively depend on the Q triggering offsets, and a time unit to which any CSI-RS resource group in the Q CSI-RS resource groups belongs in time domain depends on the time domain resource occupied by the first signaling and one triggering offset in the Q triggering offsets.

In an embodiment, the first CSI-RS resource set belonging to at least one time unit in time domain, and the at least one time unit depending on the time domain resource occupied by the first signaling and at least one triggering offset include: The first CSI-RS resource set includes M CSI-RS resources, the at least one triggering offset includes M triggering offsets, where M is a positive integer greater than 1, time units to which the M CSI-RS resources respectively belong in time domain respectively depend on the M triggering offsets, and a time unit to which any CSI-RS resource in the M CSI-RS resources belongs in time domain depends on the time domain resource occupied by the first signaling and one triggering offset in the M triggering offsets.

In an embodiment, the first CSI-RS resource set belongs to at In an embodiment, the first CSI-RS resource set belonging to at least one time unit in time domain, and the at least one time unit depending on the time domain resource occupied by the first signaling and at least one triggering offset include: A reference CSI-RS resource is one CSI-RS resource in the first CSI-RS resource set, the reference CSI-RS resource belongs to a reference time unit in time domain, and the at least one time unit includes the reference time unit; and the reference time unit depends on the time domain resource occupied by the first signaling and a reference triggering offset, and the at least one triggering offset includes the reference triggering offset.

In an embodiment, the first CSI-RS resource set belongs to at In an embodiment, the first CSI-RS resource set belonging to at least one time unit in time domain, and the at least one time unit depending on the time domain resource occupied by the first signaling and at least one triggering offset include: A reference CSI-RS resource is any CSI-RS resource in the first CSI-RS resource set, the reference CSI-RS resource belongs to a reference time unit in time domain, and the at least one time unit includes the reference time unit; and the reference time unit depends on the time domain resource occupied by the first signaling and a reference triggering offset, and the at least one triggering offset includes the reference triggering offset.

In an embodiment, one triggering offset is one non-negative integer.

In an embodiment, one triggering offset is one non-negative integer, and a unit of the triggering offset is a symbol.

In an embodiment, one triggering offset is one non-negative real number.

In an embodiment, the at least one triggering offset is predefined.

In an embodiment, the at least one triggering offset is configurable.

In an embodiment, the at least one triggering offset is configured by at least one higher layer parameter.

In an embodiment, the at least one triggering offset is configured by at least one higher layer parameter with a name including *TriggeringOffset*.

In an embodiment, the at least one triggering offset is configured by at least one higher layer parameter with a name including *aperiodicTriggeringOffset*.

In an embodiment, the at least one triggering offset is configured by at least one higher layer parameter with a name including *TriggeringOffset*, one triggering offset is one non-negative integer, and a unit of the triggering offset is a symbol.

In an embodiment, the at least one triggering offset is configured by at least one higher layer parameter with a name including *aperiodicTriggeringOffset*, one triggering offset is one non-negative integer, and a unit of the triggering offset is a symbol.

In an embodiment, the time unit is a slot (slot).

In an embodiment, the time unit includes one or more slots (slot).

In an embodiment, the time unit is a subframe (subframe).

In an embodiment, the time unit includes at least one symbol.

In an embodiment, the time unit includes a plurality of symbols.

In an embodiment, the symbol is a single-carrier symbol.

In an embodiment, the symbol is a multicarrier symbol.

In an embodiment, the symbol is a symbol in a 5G system.

In an embodiment, the symbol is a symbol in a 6G system.

In an embodiment, the multicarrier symbol is an OFDM (Orthogonal Frequency Division Multiplexing, orthogonal frequency division multiplexing) symbol.

In an embodiment, the symbol is obtained after an output of a transform precoder (transform precoding) undergoes OFDM symbol generation (Generation).

In an embodiment, the multicarrier symbol is an SC-FDMA (Single Carrier - Frequency Division Multiple Access, single carrier - frequency division multiple access) symbol.

In an embodiment, the multicarrier symbol is a DFT-S-OFDM (Discrete Fourier Transform Spread OFDM, discrete Fourier transform spread OFDM) symbol.

In an embodiment, the multicarrier symbol is an FBMC (Filter Bank Multi Carrier, filter bank multi carrier) symbol.

In an embodiment, the multicarrier symbol includes a CP (Cyclic Prefix, cyclic prefix).

Typically, P is equal to the quantity of ports of one CSI-RS resource in the first CSI-RS resource set, or P is greater than the quantity of ports of any CSI-RS resource in the first CSI-RS resource set.

In an embodiment, the at least one triggering offset depending on whether P is greater than the quantity of ports of any CSI-RS resource in the first CSI-RS resource set includes: Which triggering offset in a plurality of triggering offsets the at least one triggering offset is depends on whether P is greater than the quantity of ports of any CSI-RS resource in the first CSI-RS resource set.

In an embodiment, the at least one triggering offset depending on whether P is greater than the quantity of ports of any CSI-RS resource in the first CSI-RS resource set includes: Whether the at least one triggering offset is a first triggering offset or a second triggering offset depends on whether P is greater than the quantity of ports of any CSI-RS resource in the first CSI-RS resource set.

In an embodiment, the at least one triggering offset depending on whether P is greater than the quantity of ports of any CSI-RS resource in the first CSI-RS resource set includes: A quantity of triggering offsets included in the at least one triggering offset depends on whether P is greater than the quantity of ports of any CSI-RS resource in the first CSI-RS resource set.

In an embodiment, the at least one triggering offset depending on whether P is greater than the quantity of ports of any CSI-RS resource in the first CSI-RS resource set includes: The at least one triggering offset is configured by at least one higher layer parameter, and the at least one higher layer parameter depends on whether P is greater than the quantity of ports of any CSI-RS resource in the first CSI-RS resource set.

### Embodiment 2

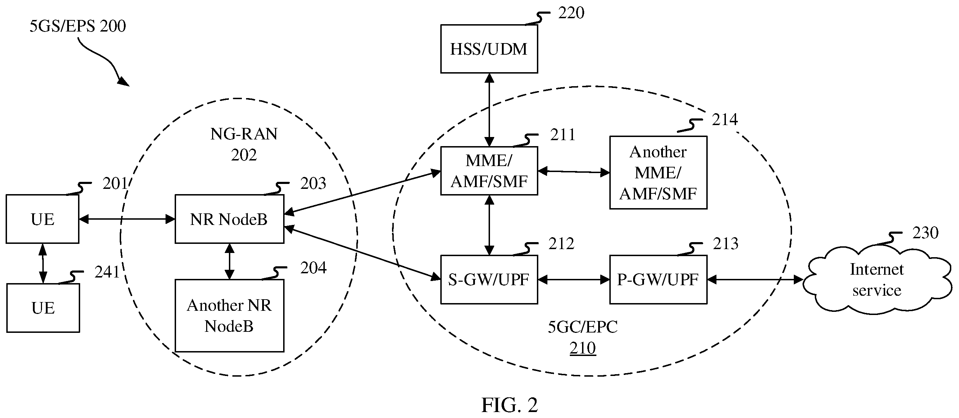

Embodiment 2 illustrates a schematic diagram of a network architecture according to an embodiment of this application, as shown in FIG. 2.

FIG. 2 describes a network architecture 200 of LTE (Long-Term Evolution, long-term evolution), LTE-A (Long-Term Evolution Advanced, long-term evolution advanced), and a future 5G system. The network architecture 200 of the LTE, the LTE-A, and the future 5G system is referred to as an EPS (Evolved Packet System, evolved packet system) 200. The 5G NR or LTE network architecture 200 may be referred to as a 5GS (5G System)/EPS (Evolved Packet System, evolved packet system) 200 or some other suitable term. The 5GS/EPS 200 may include one or more UEs (User Equipment, user equipment) 201, one UE 241 that performs Sidelink (Sidelink) communication with the UE 201, an NG-RAN (next generation radio access network) 202, a 5GC (5G Core Network, 5G core network)/EPC (Evolved Packet Core, evolved packet core) 210, an HSS (Home Subscriber Server, home subscriber server)/UDM (Unified Data Management, unified data management) 220, and an Internet service 230. The 5GS/EPS 200 may be interconnected with another access network, but these entities/interfaces are not shown for simplicity. As shown in FIG. 2, the 5GS/EPS 200 provides a packet switching service. However, a person skilled in the art will readily understand that the various concepts presented throughout this application can be extended to a network providing a circuit switching service. The NG-RAN 202 includes an NR (New Radio, new radio) NodeB (gNB) 203 and another gNB 204. The gNB 203 provides user and control plane protocol termination toward the UE 201. The gNB 203 may be connected to the another gNB 204 through an Xn interface (for example, backhaul). The gNB 203 may also be referred to as a base station, a base transceiver station, a radio base station, a radio transceiver, a transceiver function, a basic service set (BSS), an extended service set (ESS), a TRP (transmission reception point), or some other suitable terminology. The gNB 203 provides an access point to the 5GC/EPC 210 for the UE 201. Instances of the UE 201 include a cellular phone, a smart phone, a session initiation protocol (SIP) phone, a laptop computer, a personal digital assistant (PDA), satellite radio, a global positioning system, a multimedia apparatus, a video apparatus, a digital audio player (for example, an MP3 player), a camera, a game console, a drone, a flight vehicle, a narrowband physical network device, a machine type communication device, a land transportation means, an automobile, a wearable device, or any other similar functional apparatus. A person skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminology. The gNB 203 is connected to the 5GC/EPC 210 through an S1/NG interface. The 5GC/EPC 210 includes an MME (Mobility Management Entity, mobility management entity)/AMF (Authentication Management Field, authentication management field)/SMF (Session Management Function, session management function) 211, another MME/AMF/SMF 214, an S-GW (Service Gateway, service gateway)/UPF (User Plane Function, user plane function) 212, and a P-GW (Packet Date Network Gateway, packet data network gateway)/UPF 213. The MME/AMF/SMF 211 is a control node that processes signaling between the UE 201 and the 5GC/EPC 210. Generally, the MME/AMF/SMF 211 provides bearer and connection management. All user IP (Internet Protocal, Internet Protocol) packets are transmitted through the S-GW/UPF 212, and the S-GW/UPF 212 itself is connected to the P-GW/UPF 213. The P-GW provides UE IP address allocation and other functions. The P-GW/UPF 213 is connected to the Internet service 230. The Internet service 230 includes corresponding Internet Protocol services of an operator, which may specifically include Internet, intranet, IMS (IP Multimedia Subsystem, IP multimedia subsystem), and packet switching (Packet switching) services.

In an embodiment, the first node in this application includes the UE 201.

In an embodiment, the first node in this application includes the UE 241.

In an embodiment, the second node in this application includes the gNB 203.

### Embodiment 3

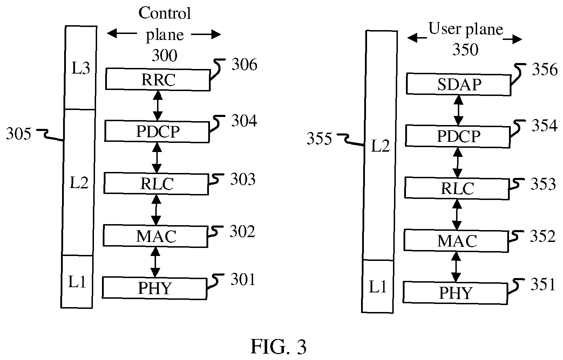

Embodiment 3 illustrates a schematic diagram of an embodiment of a radio protocol architecture for a user plane and a control plane according to an embodiment of this application, as shown in FIG. 3.

Embodiment 3 illustrates a schematic diagram of an embodiment of a radio protocol architecture for a user plane and a control plane according to this application, as shown in FIG. 3. FIG. 3 is a schematic diagram describing an embodiment of a radio protocol architecture for a user plane 350 and a control plane 300. FIG. 3 shows a radio protocol architecture for a control plane 300 between a first communication node device (a UE, a gNB, or an RSU in V2X) and a second communication node device (a gNB, a UE, or an RSU in V2X), or between two UEs by using three layers: a layer 1, a layer 2, and a layer 3. The layer 1 (L1 layer) is a lowest layer and implements various PHY (physical layer) signal processing functions. The L1 layer is referred to as a PHY 301 herein. The layer 2 (L2 layer) 305 is above the PHY 301 and is responsible for a link between the first communication node device and the second communication node device, or between two UEs. The L2 layer 305 includes a MAC (Medium Access Control, medium access control) sublayer 302, an RLC (Radio Link Control, radio link control protocol) sublayer 303, and a PDCP (Packet Data Convergence Protocol, packet data convergence protocol) sublayer 304. These sublayers terminate at the second communication node device. The PDCP sublayer 304 provides multiplexing between different radio bearers and logical channels. The PDCP sublayer 304 further provides security by encrypting a data packet, and provides inter-cell mobility support for the first communication node device between second communication node devices. The RLC sublayer 303 provides segmentation and reassembly of an upper layer data packet, retransmission of a lost data packet, and reordering of data packets to compensate for out-of-order reception due to HARQ. The MAC sublayer 302 provides multiplexing between logical and transport channels. The MAC sublayer 302 is further responsible for allocating various radio resources (for example, resource blocks) in a cell between first communication node devices. The MAC sublayer 302 is further responsible for a HARQ operation. An RRC (Radio Resource Control, radio resource control) sublayer 306 of the layer 3 (L3 layer) in the control plane 300 is responsible for obtaining a radio resource (namely, a radio bearer) and configuring a lower layer by using RRC signaling between the second communication node device and the first communication node device. The radio protocol architecture of the user plane 350 includes the layer 1 (L1 layer) and the layer 2 (L2 layer). In the user plane 350, the radio protocol architecture for the first communication node device and the second communication node device is substantially the same as corresponding layers and sublayers in the control plane 300 with respect to a physical layer 351, a PDCP sublayer 354 of an L2 layer 355, an RLC sublayer 353 of the L2 layer 355, and a MAC sublayer 352 of the L2 layer 355, even though the PDCP sublayer 354 further provides header compression for an upper layer data packet to reduce radio transmission overheads. The L2 layer 355 in the user plane 350 further includes an SDAP (Service Data Adaptation Protocol, service data adaptation protocol) sublayer 356. The SDAP sublayer 356 is responsible for mapping between a QoS flow and a data radio bearer (DRB, Data Radio Bearer) to support service diversity. Although not shown in the figure, the first communication node device may have several upper layers above the L2 layer 355, including a network layer (for example, an IP layer) terminated at a P-GW on a network side and an application layer terminated at the other end of connection (for example, a remote UE and a server).

In an embodiment, the radio protocol architecture in FIG. 3 is applicable to the first node in this application.

In an embodiment, the radio protocol architecture in FIG. 3 is applicable to the second node in this application.

In an embodiment, the first CSI reporting configuration is generated at the RRC sublayer 306.

In an embodiment, the first CSI is generated at the PHY 301.

In an embodiment, the first CSI is generated at the PHY 351.

In an embodiment, the first signaling is generated at the PHY 301.

In an embodiment, the first signaling is generated at the PHY 351.

In an embodiment, the first CSI is generated at the PHY 301.

In an embodiment, the first CSI is generated at the MAC layer.

In an embodiment, the CSI-RS in the first CSI-RS resource set is generated at the PHY 301.

In an embodiment, the CSI-RS in the first CSI-RS resource set is generated at the PHY 351.

In an embodiment, the reference signal in the second RS resource set is generated at the PHY 301.

In an embodiment, the reference signal in the second RS resource set is generated at the PHY 351.

In an embodiment, the higher layer in this application is a layer above the physical layer.

In an embodiment, the higher layer in this application is the RRC layer.

In an embodiment, the higher layer in this application is the MAC layer.

In an embodiment, the higher layer in this application includes at least one of the RRC layer or the MAC layer.

### Embodiment 4

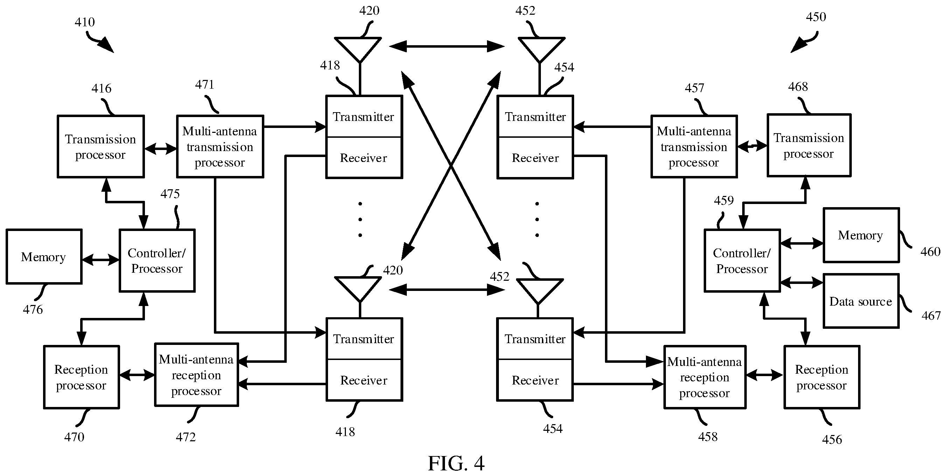

Embodiment 4 illustrates a schematic diagram of a first communication device and a second communication device according to an embodiment of this application, as shown in FIG. 4. FIG. 4 is a block diagram of a first communication device 410 and a second communication device 450 communicating with each other in an access network.

The first communication device 410 includes a controller/processor 475, a memory 476, a reception processor 470, a transmission processor 416, a multi-antenna reception processor 472, a multi-antenna transmission processor 471, a transmitter/receiver 418, and an antenna 420.

The second communication device 450 includes a controller/processor 459, a memory 460, a data source 467, a transmission processor 468, a reception processor 456, a multi-antenna transmission processor 457, a multi-antenna reception processor 458, a transmitter/receiver 454, and an antenna 452.

During transmission from the first communication device 410 to the second communication device 450, at the first communication device 410, an upper layer data packet from a core network is provided to the controller/processor 475. The controller/processor 475 implements a functionality of the L2 layer. In a DL, the controller/processor 475 provides header compression, encryption, packet segmentation and reordering, multiplexing between logical and transport channels, and radio resource allocation for the second communication device 450 based on various priority metrics. The controller/processor 475 is further responsible for a HARQ operation, retransmission of a lost packet, and signaling to the second communication device 450. The transmission processor 416 and the multi-antenna transmission processor 471 implement various signal processing functions for the L1 layer (namely, the physical layer). The transmission processor 416 implements encoding and interleaving to facilitate forward error correction (FEC) at the second communication device 450, and constellation mapping based on various modulation schemes (such as binary phase shift keying (BPSK), quadrature phase shift keying (QPSK), M-ary phase shift keying (M-PSK), and M-ary quadrature amplitude modulation (M-QAM)). The multi-antenna transmission processor 471 performs digital space precoding, including codebook-based precoding and non-codebook-based precoding, on an encoded and modulated symbol, and beamforming processing, to generate one or more parallel streams. The transmission processor 416 then maps each parallel stream to a subcarrier, multiplexes the modulated symbol with a reference signal (for example, a pilot) in time domain and/or frequency domain, and then uses inverse fast Fourier transform (IFFT) to generate a physical channel carrying a time domain multicarrier symbol stream. Then, the multi-antenna transmission processor 471 performs an operation of analog precoding sending/beamforming on the time domain multicarrier symbol stream. Each transmitter 418 converts a baseband multicarrier symbol stream provided by the multi-antenna transmission processor 471 into a radio frequency stream, and then provides the radio frequency stream to different antennas 420.

During transmission from the first communication device 410 to the second communication device 450, at the second communication device 450, each receiver 454 receives a signal through a corresponding antenna 452 of the receiver. Each receiver 454 restores information modulated onto a radio frequency carrier, converts a radio frequency stream into a baseband multicarrier symbol stream, and provides the baseband multicarrier symbol stream to the reception processor 456. The reception processor 456 and the multi-antenna reception processor 458 implement various signal processing functions of the L1 layer. The multi-antenna reception processor 458 performs an operation of analog precoding receiving/beamforming on the baseband multicarrier symbol stream from the receiver 454. The reception processor 456 converts, from time domain to frequency domain through fast Fourier transform (FFT), the baseband multicarrier symbol stream obtained after the operation of analog precoding receiving/beamforming. In frequency domain, a physical-layer data signal and a reference signal are demultiplexed by the reception processor 456. The reference signal is used for channel estimation; and the data signal is restored after multi-antenna detection performed by the multi-antenna reception processor 458, to obtain any parallel stream that uses the second communication device 450 as a destination. A symbol on each parallel stream is demodulated and restored in the reception processor 456, and a soft decision is generated. The reception processor 456 then decodes and de-interleaves the soft decision to restore upper layer data and a control signal transmitted by the first communication device 410 on a physical channel. The upper layer data and the control signal are then provided to the controller/processor 459. The controller/processor 459 implements functions of the L2 layer. The controller/processor 459 may be associated with the memory 460 that stores program code and data. The memory 460 may be referred to as a computer-readable medium. In the DL (DownLink, downlink), the controller/processor 459 provides demultiplexing between transport and logical channels, packet reassembly, decryption, header decompression, and control signal processing, to restore the upper layer data packet from the core network. The upper layer data packet is then provided to all protocol layers above the L2 layer. Various control signals may also be provided to an L3 for processing by the L3. The controller/processor 459 is further responsible for error detection by using an acknowledgment (ACK) and/or negative acknowledgment (NACK) protocol to support a HARQ operation.

During transmission from the second communication device 450 to the first communication device 410, at the second communication device 450, an upper layer data packet is provided to the controller/processor 459 by using the data source 467. The data source 467 represents all protocol layers above the L2 layer. Similar to the described sending function at the first communication device 410 in the DL, the controller/processor 459 implements header compression, encryption, packet segmentation and reordering, and multiplexing between logical and transport channels based on radio resource allocation of the first communication device 410, to implement functions of the L2 layer for the user plane and the control plane. The controller/processor 459 is further responsible for a HARQ operation, retransmission of a lost packet, and signaling to the first communication device 410. The transmission processor 468 performs modulation mapping and channel encoding processing, and the multi-antenna transmission processor 457 performs digital multi-antenna spatial precoding, including codebook-based precoding and non-codebook-based precoding, and beamforming processing. Then, the transmission processor 468 modulates a generated parallel stream into a multicarrier/single-carrier symbol stream, and the multicarrier/single-carrier symbol stream is provided to different antennas 452 by using the transmitter 454 after undergoing an analog precoding/beamforming operation in the multi-antenna transmission processor 457. Each transmitter 454 first converts a baseband symbol stream provided by the multi-antenna transmission processor 457 into a radio frequency symbol stream, and then provides the radio frequency symbol stream to the antenna 452.

During transmission from the second communication device 450 to the first communication device 410, a function at the first communication device 410 is similar to the receiving function at the second communication device 450 described during the transmission from the first communication device 410 to the second communication device 450. Each receiver 418 receives a radio frequency signal through a corresponding antenna 420 of the receiver, converts the received radio frequency signal into a baseband signal, and provides the baseband signal to the multi-antenna reception processor 472 and the reception processor 470. The reception processor 470 and the multi-antenna reception processor 472 jointly implement functions of the L1 layer. The controller/processor 475 implements functions of the L2 layer. The controller/processor 475 may be associated with the memory 476 that stores program code and data. The memory 476 may be referred to as a computer-readable medium. The controller/processor 475 provides demultiplexing between transport and logical channels, packet reassembly, decryption, header decompression, and control signal processing, to restore an upper layer data packet from the second communication device 450. The upper layer data packet from the controller/processor 475 may be provided to the core network. The controller/processor 475 is further responsible for error detection by using an ACK and/or NACK protocol to support a HARQ operation.

In an embodiment, the second communication device 450 includes at least one processor and at least one memory. The at least one memory includes computer program code, and the at least one memory and the computer program code are configured to be used with the at least one processor. The second communication device 450 apparatus is configured to at least: receive a first CSI reporting configuration, where the first CSI reporting configuration indicates a first CSI-RS resource set for channel measurement, and the first CSI-RS resource set includes a plurality of CSI-RS resources; the first CSI reporting configuration is used to configure CSI reporting for P ports, where P is a positive integer greater than 1; receive first signaling; receive some or all CSI-RSs in the first CSI-RS resource set; and send first CSI. The first signaling is used to trigger the first CSI, and the first CSI is CSI for P ports configured by the first CSI reporting configuration. The first CSI-RS resource set belongs to at least one time unit in time domain, and the at least one time unit depends on a time domain resource occupied by the first signaling and at least one triggering offset. The at least one triggering offset depends on whether P is greater than a quantity of ports of any CSI-RS resource in the first CSI-RS resource set.

In an embodiment, the second communication device 450 includes a memory storing a computer-readable instruction program, where the computer-readable instruction program, when executed by at least one processor, generates actions. The actions include: receiving a first CSI reporting configuration, where the first CSI reporting configuration indicates a first CSI-RS resource set for channel measurement, and the first CSI-RS resource set includes a plurality of CSI-RS resources; the first CSI reporting configuration is used to configure CSI reporting for P ports, where P is a positive integer greater than 1; receiving first signaling; receiving some or all CSI-RSs in the first CSI-RS resource set; and sending first CSI. The first signaling is used to trigger the first CSI, and the first CSI is CSI for P ports configured by the first CSI reporting configuration. The first CSI-RS resource set belongs to at least one time unit in time domain, and the at least one time unit depends on a time domain resource occupied by the first signaling and at least one triggering offset. The at least one triggering offset depends on whether P is greater than a quantity of ports of any CSI-RS resource in the first CSI-RS resource set.

In an embodiment, the first communication device 410 includes at least one processor and at least one memory. The at least one memory includes computer program code, and the at least one memory and the computer program code are configured to be used with the at least one processor. The first communication device 410 apparatus is configured to at least: send a first CSI reporting configuration, where the first CSI reporting configuration indicates a first CSI-RS resource set for channel measurement, and the first CSI-RS resource set includes a plurality of CSI-RS resources; the first CSI reporting configuration is used to configure CSI reporting for P ports, where P is a positive integer greater than 1; send first signaling; send some or all CSI-RSs in the first CSI-RS resource set; and receive first CSI. The first signaling is used to trigger the first CSI, and the first CSI is CSI for P ports configured by the first CSI reporting configuration. The first CSI-RS resource set belongs to at least one time unit in time domain, and the at least one time unit depends on a time domain resource occupied by the first signaling and at least one triggering offset. The at least one triggering offset depends on whether P is greater than a quantity of ports of any CSI-RS resource in the first CSI-RS resource set.

In an embodiment, the first communication device 410 includes a memory storing a computer-readable instruction program, where the computer-readable instruction program, when executed by at least one processor, generates actions. The actions include: sending a first CSI reporting configuration, where the first CSI reporting configuration indicates a first CSI-RS resource set for channel measurement, and the first CSI-RS resource set includes a plurality of CSI-RS resources; the first CSI reporting configuration is used to configure CSI reporting for P ports, where P is a positive integer greater than 1; sending first signaling; sending some or all CSI-RSs in the first CSI-RS resource set; and receiving first CSI. The first signaling is used to trigger the first CSI, and the first CSI is CSI for P ports configured by the first CSI reporting configuration. The first CSI-RS resource set belongs to at least one time unit in time domain, and the at least one time unit depends on a time domain resource occupied by the first signaling and at least one triggering offset. The at least one triggering offset depends on whether P is greater than a quantity of ports of any CSI-RS resource in the first CSI-RS resource set.

In an embodiment, the first node in this application includes the second communication device 450.

In an embodiment, the second node in this application includes the first communication device 410.

In an embodiment, at least one of {the antenna 452, the receiver 454, the reception processor 456, the multi-antenna reception processor 458, the controller/processor 459, the memory 460, and the data source 467} is configured to receive the first CSI reporting configuration in this application; at least one of {the antenna 420, the transmitter 418, the transmission processor 416, the multi-antenna transmission processor 471, the controller/processor 475, and the memory 476} is configured to send the first CSI reporting configuration in this application.

In an embodiment, at least one of {the antenna 452, the receiver 454, the reception processor 456, the multi-antenna reception processor 458, the controller/processor 459, the memory 460, and the data source 467} is configured to receive the first signaling in this application; at least one of {the antenna 420, the transmitter 418, the transmission processor 416, the multi-antenna transmission processor 471, the controller/processor 475, and the memory 476} is configured to send the first signaling in this application.

In an embodiment, at least one of {the antenna 452, the transmitter 454, the transmission processor 468, the multi-antenna transmission processor 457, the controller/processor 459, and the memory 460} is configured to send the first CSI in this application; at least one of {the antenna 420, the receiver 418, the reception processor 470, the multi-antenna reception processor 472, the controller/processor 475, and the memory 476} is configured to receive the first CSI in this application.

In an embodiment, at least one of {the antenna 452, the receiver 454, the reception processor 456, the multi-antenna reception processor 458, the controller/processor 459, the memory 460, and the data source 467} is configured to receive some or all CSI-RSs in the first CSI-RS resource set in this application; at least one of {the antenna 420, the transmitter 418, the transmission processor 416, the multi-antenna transmission processor 471, the controller/processor 475, and the memory 476} is configured to send some or all CSI-RSs in the first CSI-RS resource set in this application.

In an embodiment, at least one of {the antenna 452, the receiver 454, the reception processor 456, the multi-antenna reception processor 458, the controller/processor 459, the memory 460, and the data source 467} is configured to receive some or all reference signals in the second RS resource set in this application; at least one of {the antenna 420, the transmitter 418, the transmission processor 416, the multi-antenna transmission processor 471, the controller/processor 475, and the memory 476} is configured to send some or all reference signals in the second RS resource set in this application.

### Embodiment 5

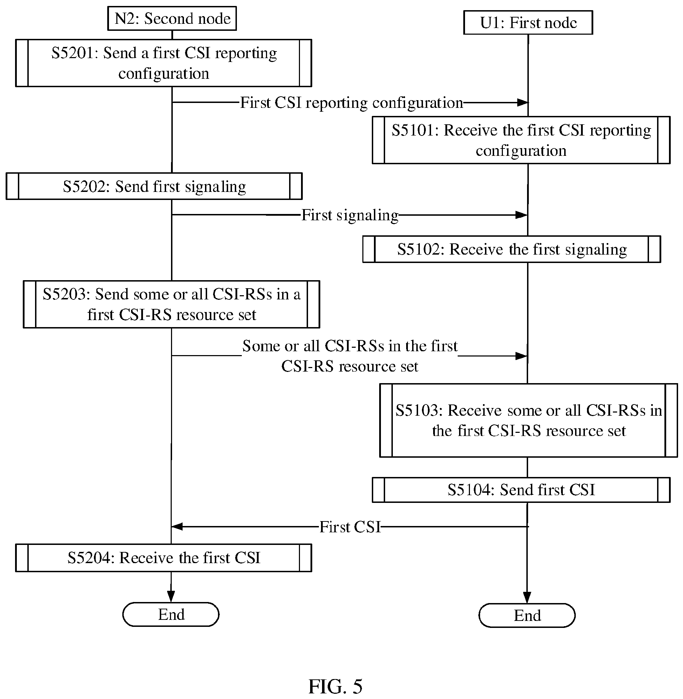

Embodiment 5 illustrates a flowchart of wireless transmission according to an embodiment of this application, as shown in FIG. 5. In FIG. 5, a first node U1 and a second node N2 are respectively two communication nodes that perform transmission through an air interface.

The **first node U1** receives a first CSI reporting configuration in step S5101; receives first signaling in step S5102; receives some or all CSI-RSs in a first CSI-RS resource set in step S5103; and sends first CSI in step S5104.

The **second node N2** sends a first CSI reporting configuration in step S5201; sends first signaling in step S5202; sends some or all CSI-RSs in a first CSI-RS resource set in step S5203; and receives first CSI in step S5204.

In Embodiment 5, the first CSI reporting configuration indicates a first CSI-RS resource set for channel measurement, and the first CSI-RS resource set includes a plurality of CSI-RS resources. The first CSI reporting configuration is used to configure CSI reporting for P ports, where P is a positive integer greater than 1. The first signaling is used to trigger the first CSI, and the first CSI is CSI for P ports configured by the first CSI reporting configuration. The first CSI-RS resource set belongs to at least one time unit in time domain, and the at least one time unit depends on a time domain resource occupied by the first signaling and at least one triggering offset. The at least one triggering offset depends on whether P is greater than a quantity of ports of any CSI-RS resource in the first CSI-RS resource set.

Typically, the first node receives some or all reference signals in the second RS resource set.

Typically, the second node sends some or all reference signals in the second RS resource set.

Typically, the first receiver in this application receives some or all reference signals in the second RS resource set.

Typically, the second transmitter in this application sends some or all reference signals in the second RS resource set.

In an embodiment, the first CSI is transmitted on a PUSCH (Physical Uplink Shared Channel, physical uplink shared channel).

In an embodiment, the first CSI is transmitted on a PUCCH (Physical Uplink Control Channel, physical uplink control channel).

In an embodiment, the first CSI reporting configuration includes a reportConfigType (reporting configuration type) field, and the reportConfigType (reporting configuration type) field in the first CSI reporting configuration indicates which one of periodic (periodic), semi-persistent on a PUSCH (semi Persistent On PUSCH), semi-persistent on a PUCCH (semi Persistent On PUCCH), or aperiodic (aperiodic) the first CSI is.

In an embodiment, the first CSI reporting configuration further indicates a reporting quantity included in the first CSI.

In an embodiment, the first CSI reporting configuration includes a reportQuantity field, and the field in the first CSI reporting configuration indicates the reporting quantity (report quantity) included in the first CSI.

In an embodiment, the first CSI includes at least CQI (Channel quality indicator, channel quality indicator) among the CQI, a PMI (Precoding Matrix Indicator, precoding matrix indicator), a CRI (CSI-RS Resource Indicator, CSI-RS resource indicator), a layer indicator (Layer Indicator, LI), and an RI (Rank Indicator, rank indicator).

In an embodiment, the CSI for P ports is calculated based on channel measurement for P CSI-RS ports.

In an embodiment, the CSI for P ports is calculated based on a channel parameter matrix obtained through channel measurement for P CSI-RS ports.

In an embodiment, the CSI for P ports includes at least a PMI and a CQI for P ports.

In an embodiment, the CSI for P ports includes at least a PMI and a CQI for P ports, where the PMI for P ports indicates a precoding matrix in a codebook for P ports.

In an embodiment, the CSI for P ports includes at least a PMI and a CQI for P ports, where the PMI for P ports indicates a precoding matrix with a quantity of rows equal to P.

In an embodiment, the CSI for P ports includes at least an RI, a PMI, and a CQI for P ports, where a rank indicated by the RI in the CSI for P ports is a positive integer not greater than P.

In an embodiment, the CSI for P ports includes a PMI and a CQI for P ports, where the CQI in the first CSI is calculated based on a condition of at least the PMI in the first CSI.

In an embodiment, the CSI for P ports includes a PMI for P ports, where the PMI for P ports indicates a precoding matrix in a codebook for P ports.

In an embodiment, the CSI for P ports includes a PMI for P ports, where the PMI for P ports indicates a precoding matrix with a quantity of rows equal to P.

Under the constraints of the foregoing methods or embodiments, how to calculate the CSI for P ports is determined independently by a manufacturer of the first node, or is implementation-related. The following describes a typical but non-limiting implementation.

The CSI for P ports includes a PMI and a CQI for P ports. The first node performs measurement on P CSI-RS ports to obtain a channel parameter matrix *H*_{*r*×*P*}, and performs power adjustment on the channel parameter matrix *H*_{*r*×}*_{P}.* The adjusted channel parameter matrix is $\sqrt{Q} ⋅ {H}_{r \times P}$, where *Q* is an assumed (assumed) ratio of PDSCH (Physical downlink shared channel, physical downlink shared channel) EPRE to NZP CSI-RS EPRE. Under the condition of using the precoding matrix *W*_{*P*×*l*}, a precoded channel parameter matrix is $\sqrt{P} ⋅ {H}_{r \times P} ⋅ {W}_{P \times l}$ , where the PMI for P ports indicates *W*_{*P*×*l*}, *l* is a rank (rank) or a quantity of layers. In one case, *l* is a positive integer not greater than *P*. In another case, the precoding matrix is an identity matrix, and in this case, *P* = *l*. An equivalent channel capacity of *H*_{*r*×*P*} · *W*_{*P*×*l*} is calculated by using criteria such as SINR (Signal Interference Noise Ratio, signal interference noise ratio), EESM (Exponential Effective SINR Mapping, exponential effective SINR mapping), or RBIR (Received Block mean mutual Information Ratio, received block mean mutual Information ratio). Then, the CQI in the CSI for P ports is determined from the equivalent channel capacity through table lookup or the like.

In an embodiment, the first CSI includes at least a CQI.

In an embodiment, the first CSI includes at least an RI and a CQI.

In an embodiment, the first CSI includes at least an RI, a PMI, and a CQI.

In an embodiment, the first CSI includes at least an RI, an LI, a PMI, and a CQI.

In an embodiment, the first CSI includes at least a first resource indication and a CQI. The first resource indication indicates one or more CSI-RS resources in the first CSI-RS resource set, or the first resource indication includes one or more CRIs.

In an embodiment, the first CSI includes at least a first resource indication, an RI, and a CQI. The first resource indication indicates one or more CSI-RS resources in the first CSI-RS resource set, or the first resource indication includes one or more CRIs.

In an embodiment, the first CSI includes at least a first resource indication, an RI, a PMI, and a CQI. The first resource indication indicates one or more CSI-RS resources in the first CSI-RS resource set, or the first resource indication includes one or more CRIs.

In an embodiment, the first CSI includes a first resource indication, an RI, an LI, a PMI, and a CQI. The first resource indication indicates one or more CSI-RS resources in the first CSI-RS resource set, or the first resource indication includes one or more CRIs.

In an embodiment, the first CSI includes at least an RI and a CQI. A rank indicated by the RI in the first CSI is a positive integer not greater than P, and the CQI in the first CSI is calculated based on a condition of (conditioned on) at least the RI in the first CSI.

In an embodiment, the first CSI includes at least an RI, a PMI, and a CQI. The CQI in the first CSI is calculated based on a condition of at least the RI in the first CSI and the PMI in the first CSI.

In an embodiment, the first CSI includes at least an RI, an LI, a PMI, and a CQI. The CQI in the first CSI is calculated based on a condition of at least the RI, the LI, and the PMI in the first CSI.

In an embodiment, the first CSI includes at least a first resource indication and a CQI. The first resource indication indicates one or more CSI-RS resources in the first CSI-RS resource set, or the first resource indication includes one or more CRIs. The CQI in the first CSI is calculated based on a condition of (conditioned on) at least the first resource indication in the first CSI.

In an embodiment, the first CSI includes at least a first resource indication, an RI, and a CQI. The first resource indication indicates one or more CSI-RS resources in the first CSI-RS resource set, or the first resource indication includes one or more CRIs. The CQI in the first CSI is calculated based on a condition of (conditioned on) at least the first resource indication and the RI in the first CSI.

In an embodiment, the first CSI includes at least a first resource indication, an RI, a PMI, and a CQI. The first resource indication indicates one or more CSI-RS resources in the first CSI-RS resource set, or the first resource indication includes one or more CRIs. The CQI in the first CSI is calculated based on a condition of (conditioned on) at least the first resource indication, the RI, and the PMI in the first CSI.

In an embodiment, the first CSI includes a first resource indication, an RI, an LI, a PMI, and a CQI. The first resource indication indicates one or more CSI-RS resources in the first CSI-RS resource set, or the first resource indication includes one or more CRIs. The CQI in the first CSI is calculated based on a condition of (conditioned on) at least the first resource indication, the RI, the LI, and the PMI in the first CSI.

In an embodiment, at least one CSI-RS resource in the first CSI-RS resource set is used for channel measurement for the first CSI.

In an embodiment, at least one CSI-RS resource in the first CSI-RS resource set is used for channel measurement for the first CSI, and at least one RS resource in the second RS resource set is used for interference measurement for the first CSI.

In an embodiment, an IE used to configure a CSI-RS resource is an IE NZP-CSI-RS-Resource.

Under the constraints of the foregoing methods or embodiments, a specific algorithm used to calculate the first CSI is determined independently by a manufacturer of the first node, or is implementation-related. The following describes a typical but non-limiting implementation.

The first node performs measurement on P CSI-RS ports to obtain a channel parameter matrix *H*_{*r*×*P*}, where the P CSI-RS ports include ports of one or more CSI-RS resources in the first CSI-RS resource set; and performs power adjustment on the channel parameter matrix *H*_{*r*×*P*}. The adjusted channel parameter matrix is $\sqrt{Q} ⋅ {H}_{r \times P}$, where *Q* is an assumed (assumed) ratio of PDSCH EPRE to NZP CSI-RS EPRE. Under the condition of using the precoding matrix *W*_{*P*×*l*}, a precoded channel parameter matrix is $\sqrt{P} ⋅ {H}_{r \times P} ⋅ {W}_{P \times l}$, where *l* is a rank (rank) or a quantity of layers. In one case, *l* is a positive integer not greater than *P*. In another case, the precoding matrix is an identity matrix, and in this case, *P* = *l*. The first CSI includes the CQI. An equivalent channel capacity of *H*_{*r*×*P*} · *W*_{*P*×*l*} is calculated by using criteria such as SINR (Signal Interference Noise Ratio, signal interference noise ratio), EESM (Exponential Effective SINR Mapping, exponential effective SINR mapping), or RBIR (Received Block mean mutual Information Ratio, received block mean mutual Information ratio). Then, the CQI included in the first CSI is determined from the equivalent channel capacity through table lookup or the like. Generally, the calculation of the equivalent channel capacity requires the first node to estimate interference (including noise (noise)), and the first node can obtain interference through measurement of an RS resource in the second RS resource set in this application. Generally, direct mapping of the equivalent channel capacity to a value of the CQI depends on receiver performance or a hardware-related factor such as a modulation scheme.

Under the constraints of the foregoing methods or embodiments, a specific algorithm used to calculate the first CSI is determined independently by a manufacturer of the first node, or is implementation-related. The following describes a typical but non-limiting implementation.

The first CSI indicates a first CSI-RS resource, and the first node performs measurement on P CSI-RS ports to obtain a channel parameter matrix *H*_{*r*×*P*}. The P CSI-RS ports include ports of the first CSI-RS resource in this application, or the first CSI indicates a first CSI-RS resource group, and the P CSI-RS ports include ports of all CSI-RS resources in the first CSI-RS resource group in this application. Power adjustment is performed on the channel parameter matrix *H*_{*r*×*P*}. The adjusted channel parameter matrix is $\sqrt{Q} ⋅ {H}_{r \times P}$, where *Q* is an assumed (assumed) ratio of PDSCH EPRE to NZP CSI-RS EPRE. Under the condition of using the precoding matrix *W*_{*P*×*l*}, a precoded channel parameter matrix is $\sqrt{P} ⋅ {H}_{r \times P} ⋅ {W}_{P \times l}$, where *l* is a rank (rank) or a quantity of layers. In one case, *l* is a positive integer not greater than *P*. In another case, the precoding matrix is an identity matrix, and in this case, *P* = *l*. The first CSI includes the CQI. An equivalent channel capacity of *H*_{*r*×*P*} · *W*_{*P*×*l*} is calculated by using criteria such as SINR (Signal Interference Noise Ratio, signal interference noise ratio), EESM (Exponential Effective SINR Mapping, exponential effective SINR mapping), or RBIR (Received Block mean mutual Information Ratio, received block mean mutual Information ratio). Then, the CQI included in the first CSI is determined from the equivalent channel capacity through table lookup or the like. Generally, the calculation of the equivalent channel capacity requires the first node to estimate interference (including noise (noise)), and the first node can obtain interference through measurement of an RS resource in the second RS resource set in this application. Generally, direct mapping of the equivalent channel capacity to a value of the CQI depends on receiver performance or a hardware-related factor such as a modulation scheme.

### Embodiment 6

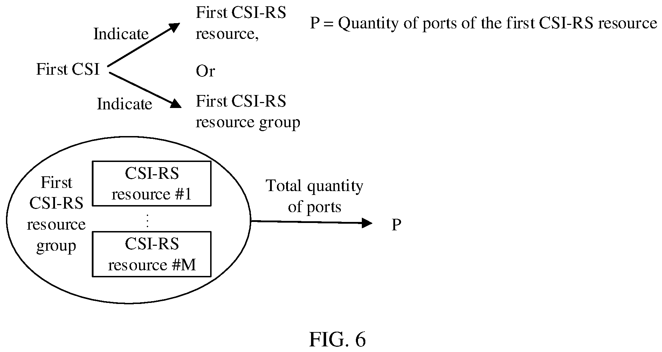

Embodiment 6 illustrates a schematic diagram of a relationship between first CSI and P according to an embodiment of this application, as shown in FIG. 6. In FIG. 6, CSI-RS resource #1, ..., and CSI-RS resource #M are a plurality of CSI-RS resources in a first CSI-RS resource group.

In Embodiment 6, when P is equal to a quantity of ports of one CSI-RS resource in the first CSI-RS resource set, the first CSI indicates a first CSI-RS resource, and the first CSI-RS resource is one CSI-RS resource in the first CSI-RS resource set. When P is greater than a quantity of ports of any CSI-RS resource in the first CSI-RS resource set, the first CSI indicates a first CSI-RS resource group, the first CSI-RS resource group includes a plurality of CSI-RS resources in the first CSI-RS resource set, and a total quantity of ports of all CSI-RS resources in the first CSI-RS resource group is equal to P.

In an embodiment, the first CSI-RS resource set includes Q CSI-RS resource groups, where Q is a positive integer greater than 1. A total quantity of ports of all CSI-RS resources in any one of the Q CSI-RS resource groups is equal to P, and the first CSI-RS resource group is one of the Q CSI-RS resource groups.

In an embodiment, the first CSI is calculated based on channel measurement for P CSI-RS ports. When P is equal to a quantity of ports of one CSI-RS resource in the first CSI-RS resource set, the P CSI-RS ports are all ports of the first CSI-RS resource, the first CSI indicates the first CSI-RS resource, and the first CSI-RS resource is one CSI-RS resource in the first CSI-RS resource set. When P is greater than a quantity of ports of any CSI-RS resource in the first CSI-RS resource set, the first CSI indicates a first CSI-RS resource group, the P CSI-RS ports include all ports of all CSI-RS resources in the first CSI-RS resource group, the first CSI-RS resource group includes a plurality of CSI-RS resources in the first CSI-RS resource set, and a total quantity of ports of all CSI-RS resources in the first CSI-RS resource group is equal to P.

In an embodiment, the first CSI includes a first resource indication. When P is equal to a quantity of ports of one CSI-RS resource in the first CSI-RS resource set, the first resource indication indicates a first CSI-RS resource, and the first CSI-RS resource is one CSI-RS resource in the first CSI-RS resource set. When P is greater than a quantity of ports of any CSI-RS resource in the first CSI-RS resource set, the first resource indication indicates a first CSI-RS resource group, the first CSI-RS resource group includes a plurality of CSI-RS resources in the first CSI-RS resource set, and a total quantity of ports of all CSI-RS resources in the first CSI-RS resource group is equal to P.

In an embodiment, the first resource indication indicating the first CSI-RS resource includes: The first resource indication indicates a CRI of the first CSI-RS resource.

In an embodiment, the first resource indication indicating the first CSI-RS resource group includes: The first resource indication indicates an index or identifier of the first CSI-RS resource group.

In an embodiment, the first resource indication indicating the first CSI-RS resource group includes: The first CSI-RS resource set includes a plurality of CSI-RS resource groups, the first CSI-RS resource group is one of the plurality of CSI-RS resource groups, and the first resource indication indicates an index or identifier of the first CSI-RS resource group.

In the foregoing method, the first resource indication indicates an index or identifier of the CSI-RS resource group, so that a design is simple and indication overheads are reduced.

In an embodiment, the first resource indication indicating the first CSI-RS resource group includes: The first resource indication includes a plurality of CRIs, and the plurality of CRIs respectively indicate a plurality of CSI-RS resources in the first CSI-RS resource group.

In the foregoing method, the first resource indication includes a plurality of CRIs, and the method for indicating a CSI-RS resource by using a CRI in the existing standard is used, which has good compatibility with the standard.

Under the constraints of the foregoing methods or embodiments, how to calculate the first CSI is determined independently by a manufacturer of the first node, or is implementation-related. The following describes a typical but non-limiting implementation.

The first node performs measurement on P CSI-RS ports to obtain a channel parameter matrix *H*_{*r*×}*_{P}.* When P is equal to a quantity of ports of one CSI-RS resource in the first CSI-RS resource set, the P CSI-RS ports are all ports of the first CSI-RS resource, the first CSI indicates the first CSI-RS resource, and the first CSI-RS resource is one CSI-RS resource in the first CSI-RS resource set. When P is greater than a quantity of ports of any CSI-RS resource in the first CSI-RS resource set, the first CSI indicates a first CSI-RS resource group, the P CSI-RS ports include all ports of all CSI-RS resources in the first CSI-RS resource group, the first CSI-RS resource group includes a plurality of CSI-RS resources in the first CSI-RS resource set, and a total quantity of ports of all CSI-RS resources in the first CSI-RS resource group is equal to P. Power adjustment is performed on the channel parameter matrix *H*_{*r*×}*_{P}.* The adjusted channel parameter matrix is $\sqrt{Q} ⋅ {H}_{r \times P}$, where *Q* is an assumed (assumed) ratio of PDSCH EPRE to NZP CSI-RS EPRE. Under the condition of using the precoding matrix *W*_{*P*×*l*}, *a* precoded channel parameter matrix is $\sqrt{P} ⋅ {H}_{r \times P} ⋅ {W}_{P \times l}$, where a PMI for P ports indicates *W*_{*P*×*l*}, *l* is a rank (rank) or a quantity of layers. In one case, *l* is a positive integer not greater than *P*. In another case, the precoding matrix is an identity matrix, and in this case, *P* = *l*. An equivalent channel capacity of *H*_{*r*×*P*} · *W*_{*P*×*l*} is calculated by using criteria such as SINR (Signal Interference Noise Ratio, signal interference noise ratio), EESM (Exponential Effective SINR Mapping, exponential effective SINR mapping), or RBIR (Received Block mean mutual Information Ratio, received block mean mutual Information ratio). Then, a CQI in the CSI for P ports is determined from the equivalent channel capacity through table lookup or the like.

### Embodiment 7

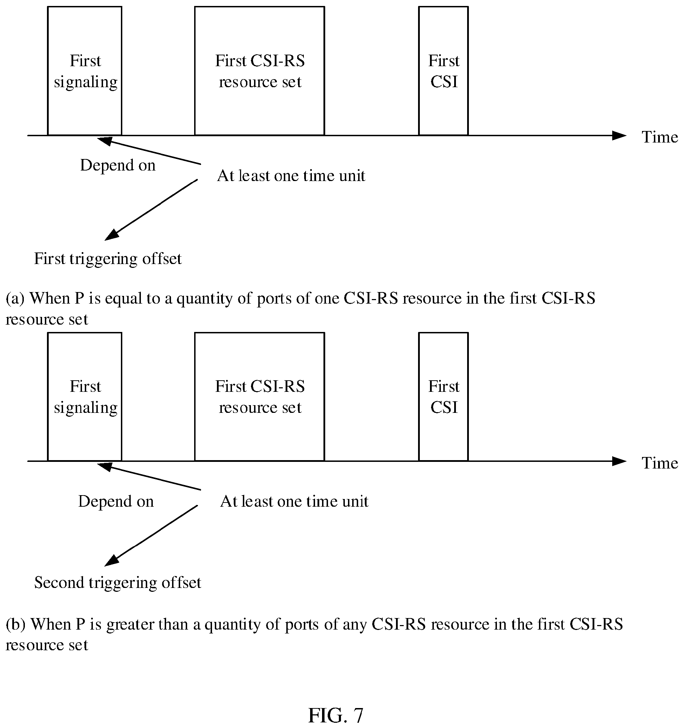

Embodiment 7 illustrates a schematic diagram of a relationship between at least one triggering offset and P according to an embodiment of this application, as shown in FIG. 7.

In Embodiment 7, the at least one triggering offset depending on whether P is greater than the quantity of ports of any CSI-RS resource in the first CSI-RS resource set includes: When P is equal to a quantity of ports of one CSI-RS resource in the first CSI-RS resource set, the at least one triggering offset is a first triggering offset; when P is greater than the quantity of ports of any CSI-RS resource in the first CSI-RS resource set, the at least one triggering offset is a second triggering offset.

Typically, the first triggering offset is one triggering offset, and the second triggering offset is one triggering offset.

In an embodiment, the first triggering offset is configured by a higher layer parameter *aperiodicTriggeringOffset*, or a higher layer parameter *aperiodicTriggeringOffset-r16*, or a higher layer parameter *aperiodicTriggeringOffset-r17.*

In an embodiment, the first triggering offset and the second triggering offset are respectively configured by different higher layer parameters.

In an embodiment, an IE used to configure the first CSI-RS resource set indicates the first triggering offset and the second triggering offset.

In an embodiment, an IE used to configure the first CSI-RS resource set is an IE NZP-CSI-RS-ResourceSet, and the IE NZP-CSI-RS-ResourceSet used to configure the first CSI-RS resource set indicates the first triggering offset and the second triggering offset.

In the foregoing method, one CSI-RS resource set is configured with two triggering offsets, which is similar to a manner of configuring a triggering offset per CSI-RS resource set in the standard, so that compatibility is good.

In an embodiment, the first triggering offset and the second triggering offset are respectively indicated by two IEs. The IE indicating the first triggering offset is used to configure the first CSI-RS resource set, and the IE indicating the second triggering offset is different from any IE used to configure one CSI-RS resource set.

In an embodiment, the first triggering offset and the second triggering offset are respectively indicated by two IEs. The IE indicating the first triggering offset is the IE NZP-CSI-RS-ResourceSet used to configure the first CSI-RS resource set, and the IE indicating the second triggering offset is different from any IE used to configure one CSI-RS resource set.

In an embodiment, the first triggering offset and the second triggering offset are respectively indicated by two IEs. The IE indicating the first triggering offset is the IE NZP-CSI-RS-ResourceSet used to configure the first CSI-RS resource set, and the IE indicating the second triggering offset includes the first CSI reporting configuration.

In an embodiment, the first triggering offset and the second triggering offset are respectively indicated by two IEs. The IE indicating the first triggering offset is the IE NZP-CSI-RS-ResourceSet used to configure the first CSI-RS resource set, and the IE indicating the second triggering offset includes a first CSI resource configuration, where the first CSI resource configuration indicates the first CSI-RS resource set.

In an embodiment, the first triggering offset and the second triggering offset are respectively indicated by two IEs. The IE indicating the first triggering offset is the IE NZP-CSI-RS-ResourceSet used to configure the first CSI-RS resource set, and the IE indicating the second triggering offset includes the first CSI reporting configuration, where the first CSI reporting configuration is an IE CSI-ReportConfig.

In an embodiment, the first triggering offset and the second triggering offset are respectively indicated by two IEs. The IE indicating the first triggering offset is the IE NZP-CSI-RS-ResourceSet used to configure the first CSI-RS resource set, and the IE indicating the second triggering offset includes a first CSI resource configuration, where the first CSI resource configuration is an IE CSI-ResourceConfig, and the first CSI resource configuration indicates the first CSI-RS resource set.

In the foregoing method, the first triggering offset is configured in the IE used to configure the first CSI-RS resource set, and the second triggering offset is not configured in the IE used to configure one CSI-RS resource set, so that flexibility is high.

### Embodiment 8

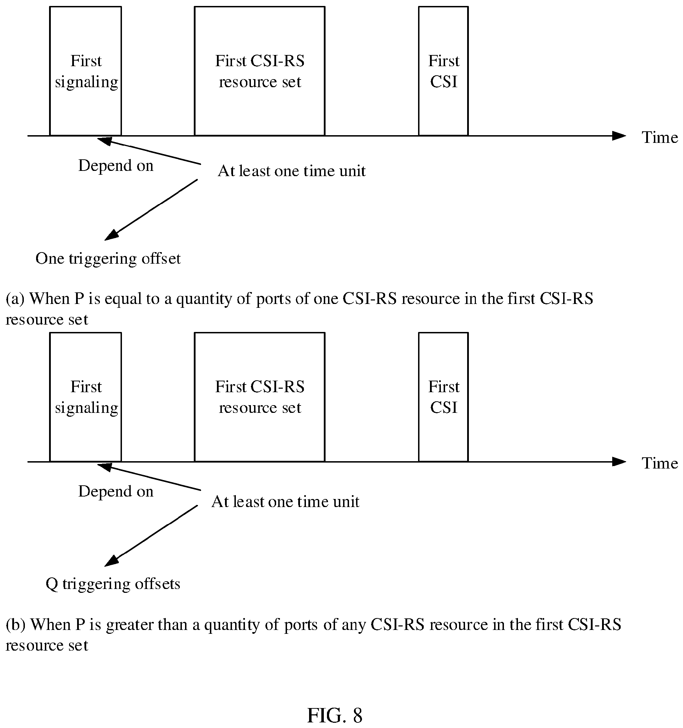

Embodiment 8 illustrates a schematic diagram of a relationship between at least one triggering offset and P according to another embodiment of this application, as shown in FIG. 8.

In Embodiment 8, the at least one triggering offset depending on whether P is greater than the quantity of ports of any CSI-RS resource in the first CSI-RS resource set includes: When P is equal to the quantity of ports of one CSI-RS resource in the first CSI-RS resource set, the at least one triggering offset is one triggering offset; when P is greater than the quantity of ports of any CSI-RS resource in the first CSI-RS resource set, the at least one triggering offset includes Q triggering offsets, where Q is a positive integer greater than 1.

In an embodiment, the at least one triggering offset depending on whether P is greater than the quantity of ports of any CSI-RS resource in the first CSI-RS resource set includes: When P is equal to the quantity of ports of one CSI-RS resource in the first CSI-RS resource set, the at least one triggering offset is a first triggering offset; when P is greater than the quantity of ports of any CSI-RS resource in the first CSI-RS resource set, the at least one triggering offset includes Q triggering offsets, where Q is a positive integer greater than 1.

In an embodiment, an IE indicating the first triggering offset is an IE NZP-CSI-RS-ResourceSet used to configure the first CSI-RS resource set.

In an embodiment, an IE used to configure the first CSI-RS resource set indicates the first triggering offset and the Q triggering offsets.

In an embodiment, an IE used to configure the first CSI-RS resource set is an IE NZP-CSI-RS-ResourceSet, and the IE NZP-CSI-RS-ResourceSet used to configure the first CSI-RS resource set indicates the first triggering offset and the Q triggering offsets.

In an embodiment, the IE used to configure the first CSI-RS resource set indicates the first triggering offset.

In an embodiment, the IE used to configure the first CSI-RS resource set indicates the Q triggering offsets.

In an embodiment, an IE used to configure the first CSI-RS resource set is an IE NZP-CSI-RS-ResourceSet, and the IE NZP-CSI-RS-ResourceSet used to configure the first CSI-RS resource set indicates the first triggering offset.

In an embodiment, an IE used to configure the first CSI-RS resource set is an IE NZP-CSI-RS-ResourceSet, and the IE NZP-CSI-RS-ResourceSet used to configure the first CSI-RS resource set indicates the Q triggering offsets.

In the foregoing method, the IE that configures one CSI-RS resource set indicates triggering offsets in different cases, which is similar to a manner of configuring a triggering offset per CSI-RS resource set in the standard, so that compatibility is good.

In an embodiment, the first triggering offset and the Q triggering offsets are respectively indicated by two IEs. The IE indicating the first triggering offset is used to configure the first CSI-RS resource set, and the IE indicating the Q triggering offsets is different from any IE used to configure one CSI-RS resource set.

In an embodiment, the Q triggering offsets are indicated by one IE, and the one IE indicating the Q triggering offsets is different from any IE used to configure one CSI-RS resource set.

In an embodiment, the IE indicating the first triggering offset is an IE NZP-CSI-RS-ResourceSet used to configure the first CSI-RS resource set, and an IE indicating any one of the Q triggering offsets is different from any IE used to configure one CSI-RS resource set.

In an embodiment, the IE indicating any one of the Q triggering offsets is different from any IE used to configure one CSI-RS resource set.

In an embodiment, the first triggering offset and the Q triggering offsets are respectively indicated by two IEs. The IE indicating the first triggering offset is the IE NZP-CSI-RS-ResourceSet used to configure the first CSI-RS resource set, and the IE indicating the Q triggering offsets includes the first CSI reporting configuration.

In an embodiment, the first triggering offset and the Q triggering offsets are respectively indicated by two IEs. The IE indicating the first triggering offset is the IE NZP-CSI-RS-ResourceSet used to configure the first CSI-RS resource set, and the IE indicating the Q triggering offsets includes a first CSI resource configuration, where the first CSI resource configuration indicates the first CSI-RS resource set.

In an embodiment, the first triggering offset and the Q triggering offsets are respectively indicated by two IEs. The IE indicating the first triggering offset is the IE NZP-CSI-RS-ResourceSet used to configure the first CSI-RS resource set, and the IE indicating the Q triggering offsets includes the first CSI reporting configuration, where the first CSI reporting configuration is an IE CSI-ReportConfig.

In an embodiment, the first triggering offset and the Q triggering offsets are respectively indicated by two IEs. The IE indicating the first triggering offset is the IE NZP-CSI-RS-ResourceSet used to configure the first CSI-RS resource set, and the IE indicating the Q triggering offsets includes a first CSI resource configuration, where the first CSI resource configuration is an IE CSI-ResourceConfig, and the first CSI resource configuration indicates the first CSI-RS resource set.

In the foregoing method, the first triggering offset is configured in the IE used to configure the first CSI-RS resource set, and the Q triggering offsets are not configured in the IE used to configure one CSI-RS resource set, so that flexibility is high.

In an embodiment, the first CSI-RS resource set includes Q CSI-RS resource groups. Any CSI-RS resource group in the Q CSI-RS resource groups includes a plurality of CSI-RS resources in the first CSI-RS resource set, and a total quantity of ports of all CSI-RS resources in the same CSI-RS resource group in the Q CSI-RS resource groups is equal to P. Q IEs are respectively used to configure the Q CSI-RS resource groups, and the Q IEs respectively indicate the Q triggering offsets.

In an embodiment, the first CSI-RS resource set includes Q CSI-RS resource groups. Any CSI-RS resource group in the Q CSI-RS resource groups includes a plurality of CSI-RS resources in the first CSI-RS resource set, and a total quantity of ports of all CSI-RS resources in the same CSI-RS resource group in the Q CSI-RS resource groups is equal to P. Q IEs are respectively used to configure the Q CSI-RS resource groups, the Q IEs respectively indicate the Q triggering offsets, and any IE in the Q IEs is not the IE NZP-CSI-RS-ResourceSet.

In the foregoing method, the triggering offset is configured per (per) CSI-RS resource group, so that flexibility is high, a system design is simple, and a modification to the standard is slight.

### Embodiment 9

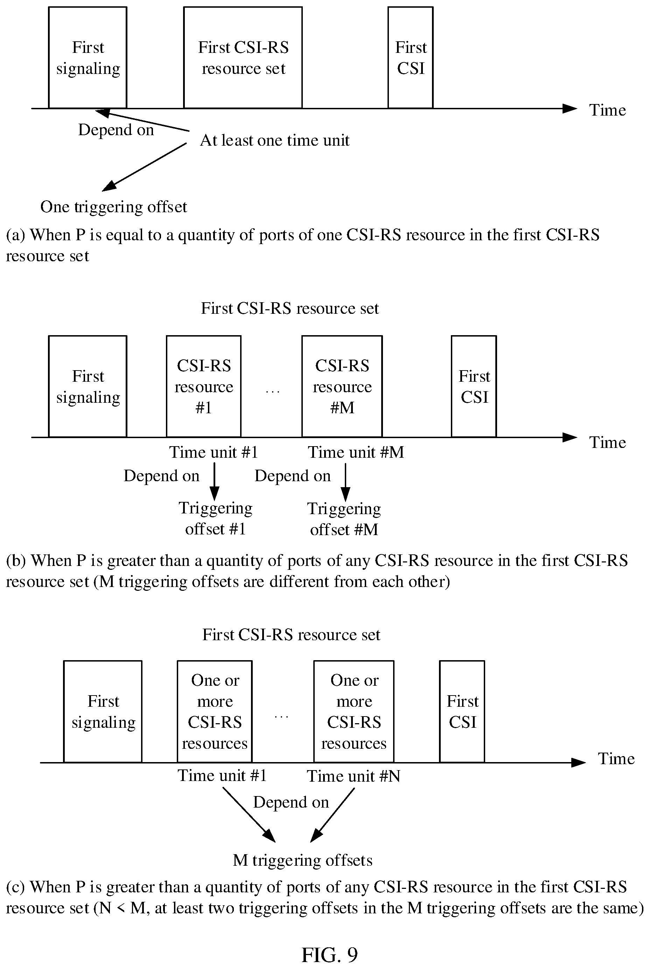

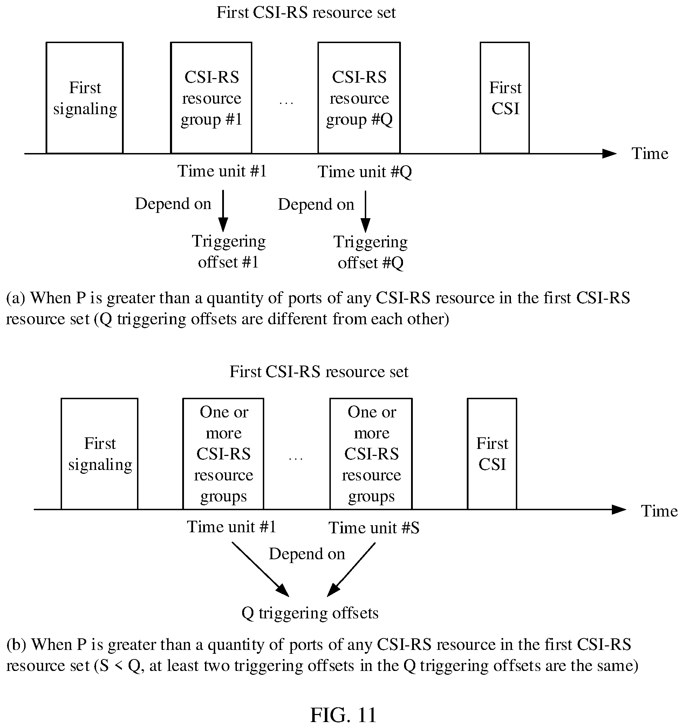

Embodiment 9 illustrates a schematic diagram of a relationship between at least one triggering offset and P according to another embodiment of this application, as shown in FIG. 11. In FIG. 9, CSI-RS resource #1, ..., and CSI-RS resource #M are M CSI-RS resources; triggering offset #1, ..., and triggering offset #M are M triggering offsets.

In Embodiment 9, the at least one triggering offset depending on whether P is greater than the quantity of ports of any CSI-RS resource in the first CSI-RS resource set includes: When P is equal to a quantity of ports of one CSI-RS resource in the first CSI-RS resource set, the at least one triggering offset is one triggering offset; when P is greater than the quantity of ports of any CSI-RS resource in the first CSI-RS resource set, the at least one triggering offset includes M triggering offsets, where M is a positive integer greater than 1, the first CSI-RS resource set includes M CSI-RS resources, the at least one time unit includes time units to which the M CSI-RS resources respectively belong in time domain, and the time units to which the M CSI-RS resources respectively belong in time domain respectively depend on the M triggering offsets.

In an embodiment, the at least one time unit including the time units to which the M CSI-RS resources respectively belong in time domain includes: The M triggering offsets are different from each other, the at least one time unit includes M time units, and the M time units respectively include the M CSI-RS resources.

In an embodiment, the at least one time unit including the time units to which the M CSI-RS resources respectively belong in time domain includes: The M triggering offsets are all the same, the at least one time unit includes only one time unit, and the time units to which the M CSI-RS resources respectively belong in time domain are all the only one time unit.

In an embodiment, the at least one time unit including the time units to which the M CSI-RS resources respectively belong in time domain includes: There are two identical triggering offsets in the M triggering offsets, the at least one time unit includes N time units, where N is a positive integer less than M, and any one of the N time units includes one or more CSI-RS resources in the M CSI-RS resources.

In an embodiment, the at least one triggering offset depending on whether P is greater than the quantity of ports of any CSI-RS resource in the first CSI-RS resource set includes: When P is equal to the quantity of ports of one CSI-RS resource in the first CSI-RS resource set, the at least one triggering offset is a first triggering offset; when P is greater than the quantity of ports of any CSI-RS resource in the first CSI-RS resource set, the at least one triggering offset includes M triggering offsets, where M is a positive integer greater than 1, the first CSI-RS resource set includes M CSI-RS resources, and time units to which the M CSI-RS resources respectively belong in time domain respectively depend on the M triggering offsets.

In an embodiment, an IE indicating the first triggering offset is an IE NZP-CSI-RS-ResourceSet used to configure the first CSI-RS resource set.

In an embodiment, an IE used to configure the first CSI-RS resource set indicates the first triggering offset and the M triggering offsets.

In an embodiment, an IE used to configure the first CSI-RS resource set is an IE NZP-CSI-RS-ResourceSet, and the IE NZP-CSI-RS-ResourceSet used to configure the first CSI-RS resource set indicates the first triggering offset and the M triggering offsets.

In an embodiment, the IE used to configure the first CSI-RS resource set indicates the first triggering offset.

In an embodiment, the IE used to configure the first CSI-RS resource set indicates the M triggering offsets.

In an embodiment, an IE used to configure the first CSI-RS resource set is an IE NZP-CSI-RS-ResourceSet, and the IE NZP-CSI-RS-ResourceSet used to configure the first CSI-RS resource set indicates the first triggering offset.

In an embodiment, an IE used to configure the first CSI-RS resource set is an IE NZP-CSI-RS-ResourceSet, and the IE NZP-CSI-RS-ResourceSet used to configure the first CSI-RS resource set indicates the M triggering offsets.

In an embodiment, the first triggering offset and the M triggering offsets are respectively indicated by two IEs. The IE indicating the first triggering offset is used to configure the first CSI-RS resource set, and the IE indicating the M triggering offsets is different from any IE used to configure one CSI-RS resource set.

In an embodiment, the M triggering offsets are indicated by one IE, and the one IE indicating the M triggering offsets is different from any IE used to configure one CSI-RS resource set.

In an embodiment, the IE indicating the first triggering offset is an IE NZP-CSI-RS-ResourceSet used to configure the first CSI-RS resource set, and an IE indicating any one of the M triggering offsets is different from any IE used to configure one CSI-RS resource set.

In an embodiment, the IE indicating any one of the M triggering offsets is different from any IE used to configure one CSI-RS resource set.

In an embodiment, the first triggering offset and the M triggering offsets are respectively indicated by two IEs. The IE indicating the first triggering offset is the IE NZP-CSI-RS-ResourceSet used to configure the first CSI-RS resource set, and the IE indicating the M triggering offsets includes the first CSI reporting configuration.

In an embodiment, the first triggering offset and the M triggering offsets are respectively indicated by two IEs. The IE indicating the first triggering offset is the IE NZP-CSI-RS-ResourceSet used to configure the first CSI-RS resource set, and the IE indicating the M triggering offsets includes a first CSI resource configuration, where the first CSI resource configuration indicates the first CSI-RS resource set.

In an embodiment, the first triggering offset and the M triggering offsets are respectively indicated by two IEs. The IE indicating the first triggering offset is the IE NZP-CSI-RS-ResourceSet used to configure the first CSI-RS resource set, and the IE indicating the M triggering offsets includes the first CSI reporting configuration, where the first CSI reporting configuration is an IE CSI-ReportConfig.

In an embodiment, the first triggering offset and the M triggering offsets are respectively indicated by two IEs. The IE indicating the first triggering offset is the IE NZP-CSI-RS-ResourceSet used to configure the first CSI-RS resource set, and the IE indicating the M triggering offsets includes a first CSI resource configuration, where the first CSI resource configuration is an IE CSI-ResourceConfig, and the first CSI resource configuration indicates the first CSI-RS resource set.

In the foregoing method, the M triggering offsets are not configured in the IE used to configure one CSI-RS resource set, so that flexibility is high.

In an embodiment, an IE indicating the first triggering offset is an IE NZP-CSI-RS-ResourceSet used to configure the first CSI-RS resource set, and M IEs are respectively used to configure the M CSI-RS resources, where the M IEs respectively indicate the M triggering offsets.

In an embodiment, M IEs are respectively used to configure the M CSI-RS resources, where the M IEs respectively indicate the M triggering offsets.

In an embodiment, M IEs NZP-CSI-RS-Resource are respectively used to configure the M CSI-RS resources, where the M IEs respectively indicate the M triggering offsets.

In the foregoing method, the triggering offset is configured per (per) CSI-RS resource, so that flexibility is good, a system design is simple, and a modification to the standard is slight.

### Embodiment 10

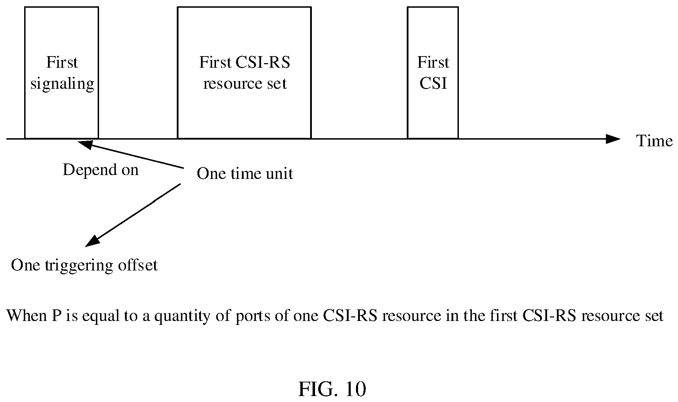

Embodiment 10 illustrates a schematic diagram of a relationship between at least one time unit and at least one triggering offset according to an embodiment of this application, as shown in FIG. 10.

In Embodiment 10, when P is equal to the quantity of ports of one CSI-RS resource in the first CSI-RS resource set, the first CSI-RS resource set belongs to one time unit in time domain, and the time unit to which the first CSI-RS resource set belongs in time domain depends on a time domain resource occupied by the first signaling and one triggering offset.

In an embodiment, the time unit to which the first CSI-RS resource set belongs in time domain depending on the time domain resource occupied by the first signaling and one triggering offset includes: The time unit to which the first CSI-RS resource set belongs in time domain depends on a time unit to which the time domain resource occupied by the first signaling belongs and one triggering offset.

In an embodiment, the time unit to which the first CSI-RS resource set belongs in time domain depending on the time domain resource occupied by the first signaling and one triggering offset includes: The time unit to which the first CSI-RS resource set belongs in time domain depends on a time unit to which an ending symbol of the time domain resource occupied by the first signaling belongs and one triggering offset.

In an embodiment, the time unit to which the first CSI-RS resource set belongs in time domain depending on the time domain resource occupied by the first signaling and one triggering offset includes: In an embodiment, the time unit to which the first CSI-RS resource set belongs in time domain depends on an ending symbol of the time domain resource occupied by the first signaling and one triggering offset.

In the foregoing method, compatibility with the standard is good.

### Embodiment 11

Embodiment 11 illustrates a schematic diagram of a relationship between at least one time unit and at least one triggering offset according to another embodiment of this application, as shown in FIG. 11. In FIG. 11, CSI-RS resource group #1, ..., and CSI-RS resource group #Q are Q CSI-RS resource groups; triggering offset #1, ..., and triggering offset #Q are Q triggering offsets.

In Embodiment 11, when P is greater than the quantity of ports of any CSI-RS resource in the first CSI-RS resource set, the first CSI-RS resource set includes Q CSI-RS resource groups, where any CSI-RS resource group in the Q CSI-RS resource groups includes a plurality of CSI-RS resources in the first CSI-RS resource set, a total quantity of ports of all CSI-RS resources in any CSI-RS resource group in the Q CSI-RS resource groups is equal to P, the at least one time unit includes time units to which the Q CSI-RS resource groups respectively belong in time domain, and the time units to which the Q CSI-RS resource groups respectively belong in time domain respectively depend on the Q triggering offsets.

In an embodiment, the at least one time unit including the time units to which the Q CSI-RS resource groups respectively belong in time domain includes: The Q triggering offsets are different from each other, the at least one time unit includes Q time units, and the Q time units respectively include the Q CSI-RS resource groups.

In an embodiment, the at least one time unit including the time units to which the Q CSI-RS resource groups respectively belong in time domain includes: The Q triggering offsets are all the same, the at least one time unit includes only one time unit, and the time units to which the Q CSI-RS resource groups respectively belong in time domain are all the only one time unit.

In an embodiment, the at least one time unit including the time units to which the Q CSI-RS resource groups respectively belong in time domain includes: There are two identical triggering offsets in the Q triggering offsets, the at least one time unit includes S time units, where S is a positive integer less than Q, and any one of the S time units includes one or more CSI-RS resource groups in the Q CSI-RS resource groups.

In an embodiment, when P is greater than the quantity of ports of any CSI-RS resource in the first CSI-RS resource set, the first CSI-RS resource set includes Q CSI-RS resource groups, all CSI-RS resources in a same CSI-RS resource group in the Q CSI-RS resource groups belong to one time unit in time domain, and time units to which the Q CSI-RS resource groups respectively belong in time domain respectively depend on the Q triggering offsets.

In an embodiment, a reference CSI-RS resource group is one CSI-RS resource group in the Q CSI-RS resource groups, the reference CSI-RS resource group belongs to a reference time unit in time domain, the reference time unit depends on a time domain resource occupied by the first signaling and a reference triggering offset, and the reference triggering offset is one triggering offset in the Q triggering offsets.

In the foregoing method, flexibility is good, a system design is simple, and a modification to the standard is slight.

### Embodiment 12

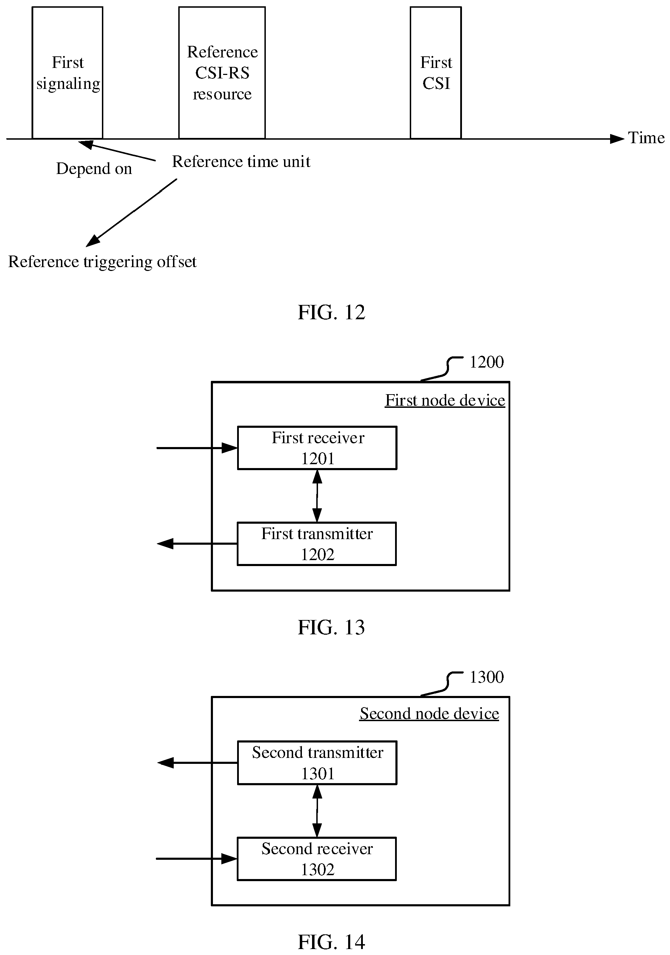

Embodiment 12 illustrates a schematic diagram of a relationship between a reference CSI-RS resource, a reference time unit, and a reference triggering offset according to an embodiment of this application, as shown in FIG. 12.

In Embodiment 12, a reference CSI-RS resource is one CSI-RS resource in the first CSI-RS resource set, the reference CSI-RS resource belongs to a reference time unit in time domain, and the at least one time unit includes the reference time unit; and the reference time unit depends on the time domain resource occupied by the first signaling and a reference triggering offset, and the at least one triggering offset includes the reference triggering offset.

Typically, the reference time unit is one time unit.

In an embodiment, when P is equal to the quantity of ports of one CSI-RS resource in the first CSI-RS resource set, the at least one time unit is the reference time unit, and the at least one triggering offset is the reference triggering offset.

In an embodiment, when P is equal to the quantity of ports of one CSI-RS resource in the first CSI-RS resource set, the at least one time unit is the reference time unit, the at least one triggering offset is the reference triggering offset, and the reference triggering offset is the first triggering offset in this application.

In an embodiment, when P is equal to the quantity of ports of one CSI-RS resource in the first CSI-RS resource set, the first CSI-RS resource set belongs to one time unit in time domain, the reference CSI-RS resource is one CSI-RS resource in the first CSI-RS resource set, the reference time unit is the one time unit to which the first CSI-RS resource set belongs in time domain, the reference time unit depends on a time domain resource occupied by the first signaling and a reference triggering offset, and the at least one triggering offset is the reference triggering offset.

In an embodiment, when P is equal to the quantity of ports of one CSI-RS resource in the first CSI-RS resource set, the first CSI-RS resource set belongs to one time unit in time domain, the reference CSI-RS resource is one CSI-RS resource in the first CSI-RS resource set, the reference time unit is the one time unit to which the first CSI-RS resource set belongs in time domain, the reference time unit depends on a time domain resource occupied by the first signaling and a reference triggering offset, the at least one triggering offset is the reference triggering offset, and the reference triggering offset is the first triggering offset in this application.

In an embodiment, when P is greater than the quantity of ports of any CSI-RS resource in the first CSI-RS resource set, the at least one time unit is the reference time unit, and the at least one triggering offset is the reference triggering offset.

In an embodiment, when P is greater than the quantity of ports of any CSI-RS resource in the first CSI-RS resource set, the at least one time unit is the reference time unit, the at least one triggering offset is the reference triggering offset, and the reference triggering offset is the second triggering offset in this application.

In an embodiment, when P is greater than the quantity of ports of any CSI-RS resource in the first CSI-RS resource set, the at least one time unit includes one or more time units, the reference time unit is one time unit in the at least one time unit, the at least one triggering offset includes one or more triggering offsets, and the reference triggering offset is one triggering offset in the at least one triggering offset.

In an embodiment, when P is greater than the quantity of ports of any CSI-RS resource in the first CSI-RS resource set, the at least one time unit includes a plurality of time units, the reference time unit is one time unit in the at least one time unit, the at least one triggering offset includes a plurality of triggering offsets, and the reference triggering offset is one triggering offset in the at least one triggering offset.

In an embodiment, when P is greater than the quantity of ports of any CSI-RS resource in the first CSI-RS resource set, the first CSI-RS resource set includes Q CSI-RS resource groups, any CSI-RS resource group in the Q CSI-RS resource groups includes a plurality of CSI-RS resources in the first CSI-RS resource set, a total quantity of ports of all CSI-RS resources in any CSI-RS resource group in the Q CSI-RS resource groups is equal to P, the at least one time unit includes time units to which the Q CSI-RS resource groups respectively belong in time domain, the time units to which the Q CSI-RS resource groups respectively belong in time domain respectively depend on the Q triggering offsets, a reference CSI-RS resource is one CSI-RS resource in the reference CSI-RS resource group, the reference CSI-RS resource group is one CSI-RS resource group in the Q CSI-RS resource groups, the reference CSI-RS resource group belongs to a reference time unit in time domain, the reference time unit depends on a time domain resource occupied by the first signaling and a reference triggering offset, and the reference triggering offset is one triggering offset in the Q triggering offsets.

In an embodiment, when P is greater than the quantity of ports of any CSI-RS resource in the first CSI-RS resource set, the at least one triggering offset includes M triggering offsets, where M is a positive integer greater than 1, the first CSI-RS resource set includes M CSI-RS resources, the at least one time unit includes time units to which the M CSI-RS resources respectively belong in time domain, the time units to which the M CSI-RS resources respectively belong in time domain respectively depend on the M triggering offsets, the reference CSI-RS resource is one CSI-RS resource in the M CSI-RS resources, the reference CSI-RS resource belongs to a reference time unit in time domain, the reference time unit depends on a time domain resource occupied by the first signaling and a reference triggering offset, and the reference triggering offset is one triggering offset in the M triggering offsets.

In an embodiment, the reference triggering offset is predefined or configured by a higher layer parameter.

In an embodiment, the at least one triggering offset is predefined or configured by a higher layer parameter.

In an embodiment, the first triggering offset is predefined or configured by a higher layer parameter.

In an embodiment, some or all of the Q triggering offsets are predefined or configured by a higher layer parameter.

In an embodiment, some or all of the M triggering offsets are predefined or configured by a higher layer parameter.

In an embodiment, the reference time unit depending on the time domain resource occupied by the first signaling and the reference triggering offset includes: The time domain resource occupied by the first signaling belongs to one time unit, and the reference time unit depends on a time unit to which the time domain resource occupied by the first signaling belongs and a reference triggering offset.

In an embodiment, the reference time unit depending on the time domain resource occupied by the first signaling and the reference triggering offset includes: The time domain resource occupied by the first signaling belongs to one or more time units, and the reference time unit depends on a time unit to which an ending symbol of the time domain resource occupied by the first signaling belongs and a reference triggering offset.

In an embodiment, the reference time unit depending on the time unit to which the time domain resource occupied by the first signaling belongs and the reference triggering offset includes: The time unit to which the time domain resource occupied by the first signaling belongs is a first time unit, or the first time unit depends on the time unit to which the time domain resource occupied by the first signaling belongs; and the reference time unit is later than the first time unit by at least the reference triggering offset.

In an embodiment, the reference time unit depending on the time unit to which the time domain resource occupied by the first signaling belongs and the reference triggering offset includes: The time unit to which the time domain resource occupied by the first signaling belongs is a first time unit, or the first time unit depends on the time unit to which the time domain resource occupied by the first signaling belongs; and the reference time unit is later than the first time unit by at least the reference triggering offset, where the reference triggering offset is a non-negative integer, and a unit of the reference triggering offset is the time unit.

In an embodiment, the reference time unit depending on the time unit to which the time domain resource occupied by the first signaling belongs and the reference triggering offset includes: The time unit to which the time domain resource occupied by the first signaling belongs is a first time unit, or the first time unit depends on the time unit to which the time domain resource occupied by the first signaling belongs; and the reference time unit is later than the first time unit by at least a first time offset, where the first time offset is equal to or greater than the reference triggering offset.

In an embodiment, the reference time unit depending on the time unit to which the time domain resource occupied by the first signaling belongs and the reference triggering offset includes: The time unit to which the time domain resource occupied by the first signaling belongs is a first time unit *n*, or the first time unit *n* depends on the time unit to which the time domain resource occupied by the first signaling belongs; and the reference time unit is not earlier than a time unit *n* +

*X*, where X is the reference triggering offset, the reference triggering offset is a non-negative integer, and a unit of the reference triggering offset is the time unit.

In an embodiment, the reference time unit depending on the time unit to which the time domain resource occupied by the first signaling belongs and the reference triggering offset includes: The time unit to which the time domain resource occupied by the first signaling belongs is a first time unit *n*, or the first time unit *n* depends on the time unit to which the time domain resource occupied by the first signaling belongs; and the reference time unit is equal to or later than a time unit *n* + *X*, where X is the reference triggering offset, the reference triggering offset is a non-negative integer, and a unit of the reference triggering offset is the time unit.

In an embodiment, the reference time unit depending on the time unit to which the time domain resource occupied by the first signaling belongs and the reference triggering offset includes: The time unit to which the time domain resource occupied by the first signaling belongs is a first time unit *n*, or the first time unit *n* depends on the time unit to which the time domain resource occupied by the first signaling belongs; and the reference time unit is equal to or later than a time unit *n* + *X* + *Y*, where X is the reference triggering offset, the reference triggering offset is a non-negative integer, a unit of the reference triggering offset is the time unit, and Y is predefined or configured or determined by a higher layer parameter.

In an embodiment, the reference time unit depending on the time unit to which the time domain resource occupied by the first signaling belongs and the reference triggering offset includes: The time unit to which the time domain resource occupied by the first signaling belongs is a first time unit, or the first time unit depends on the time unit to which the time domain resource occupied by the first signaling belongs; the reference time unit is later than the first time unit, an offset between the reference time unit and the first time unit is equal to a first time offset, and the first time offset is equal to a sum of the reference triggering offset and a second time offset; and the second time offset is a non-negative integer, or the second time offset is a non-negative integer, and a unit of the reference triggering offset and a unit of the second time offset are both the time unit.

In an embodiment, the reference time unit depending on the time unit to which the time domain resource occupied by the first signaling belongs and the reference triggering offset includes: The time unit to which the time domain resource occupied by the first signaling belongs is a first time unit, or the first time unit depends on the time unit to which the time domain resource occupied by the first signaling belongs; the reference time unit is later than the first time unit, an offset between the reference time unit and the first time unit is equal to a first time offset, the first time offset is equal to a sum of the reference triggering offset and a second time offset, the reference triggering offset is a non-negative integer, the second time offset is a non-negative integer, and a unit of the reference triggering offset and a unit of the second time offset are both the time unit; and the second time offset is equal to $\left⌊\left(\frac{{N}_{slot , offset , PDCCH}^{CA}}{{2}^{{μ}_{offset , PDCCH}}}-\frac{{N}_{slot , offset , CSIRS}^{CA}}{{2}^{{μ}_{offset , CSIRS}}}\right)⋅{2}^{{μ}_{CSIRS}}\right⌋$ , where ${N}_{slot , offset , PDCCH}^{CA}$ and *µ*_{offset,PDCCH} are determined by a higher layer parameter *ca-SlotOffset* that is configured for a cell receiving the first signaling, ${N}_{slot , offset , CSIRS}^{CA}$ and *µ*_{offset,CSIRS} are determined by a higher layer parameter *ca-SlotOffset* that is configured for a cell sending a CSI-RS in the first CSI-RS resource set.

In an embodiment, the reference time unit depending on the time unit to which the time domain resource occupied by the first signaling belongs and the reference triggering offset includes: The time unit to which the time domain resource occupied by the first signaling belongs is a first time unit *n,* or the first time unit *n* depends on the time unit to which the time domain resource occupied by the first signaling belongs; and the reference time unit is $n + X + \left⌊\left(\frac{{N}_{slot , offset , PDCCH}^{CA}}{{2}^{{μ}_{offset , PDCCH}}}-\frac{{N}_{slot , offset , CSIRS}^{CA}}{{2}^{{μ}_{offset , CSIRS}}}\right)⋅{2}^{{μ}_{CSIRS}}\right⌋$ , where X is the reference triggering offset, the reference triggering offset is a non-negative integer, a unit of the reference triggering offset is the time unit, ${N}_{slot , offset , PDCCH}^{CA}$ and *µ*_{offset,PDCCH} are determined by a higher layer parameter *ca-SlotOffset* that is configured for a cell receiving the first signaling, and ${N}_{slot , offset , CSIRS}^{CA}$ and *µ*_{offset,CSIRS} are determined by a higher layer parameter *ca-SlotOffset* that is configured for a cell sending the CSI-RS in the first CSI-RS resource set.

In an embodiment, the reference time unit depending on the time unit to which the ending symbol of the time domain resource occupied by the first signaling belongs and the reference triggering offset includes: The time unit to which the ending symbol of the time domain resource occupied by the first signaling belongs is a first time unit, or the first time unit depends on the time unit to which the ending symbol of the time domain resource occupied by the first signaling belongs; and the reference time unit is later than the first time unit by at least the reference triggering offset.

In an embodiment, the reference time unit depending on the time unit to which the ending symbol of the time domain resource occupied by the first signaling belongs and the reference triggering offset includes: The time unit to which the ending symbol of the time domain resource occupied by the first signaling belongs is a first time unit, or the first time unit depends on the time unit to which the ending symbol of the time domain resource occupied by the first signaling belongs; and the reference time unit is later than the first time unit by at least the reference triggering offset, the reference triggering offset is a non-negative integer, and a unit of the reference triggering offset is the time unit.

In an embodiment, the reference time unit depending on the time unit to which the ending symbol of the time domain resource occupied by the first signaling belongs and the reference triggering offset includes: The time unit to which the ending symbol of the time domain resource occupied by the first signaling belongs is a first time unit, or the first time unit depends on the time unit to which the ending symbol of the time domain resource occupied by the first signaling belongs; and the reference time unit is later than the first time unit by at least a first time offset, and the first time offset is equal to or greater than the reference triggering offset.

In an embodiment, the reference time unit depending on the time unit to which the ending symbol of the time domain resource occupied by the first signaling belongs and the reference triggering offset includes: The time unit to which the ending symbol of the time domain resource occupied by the first signaling belongs is a first time unit *n*, or the first time unit *n* depends on the time unit to which the ending symbol of the time domain resource occupied by the first signaling belongs; and the reference time unit is not earlier than a time unit *n* + *X*, where X is the reference triggering offset, the reference triggering offset is a non-negative integer, and a unit of the reference triggering offset is the time unit.

In an embodiment, the reference time unit depending on the time unit to which the ending symbol of the time domain resource occupied by the first signaling belongs and the reference triggering offset includes: The time unit to which the ending symbol of the time domain resource occupied by the first signaling belongs is a first time unit *n*, or the first time unit *n* depends on the time unit to which the ending symbol of the time domain resource occupied by the first signaling belongs; and the reference time unit is equal to or later than a time unit *n* + *X*, where X is the reference triggering offset, the reference triggering offset is a non-negative integer, and a unit of the reference triggering offset is the time unit.

In an embodiment, the reference time unit depending on the time unit to which the ending symbol of the time domain resource occupied by the first signaling belongs and the reference triggering offset includes: The time unit to which the ending symbol of the time domain resource occupied by the first signaling belongs is a first time unit *n*, or the first time unit *n* depends on the time unit to which the ending symbol of the time domain resource occupied by the first signaling belongs; and the reference time unit is equal to or later than a time unit *n* + *X* + *Y*, where X is the reference triggering offset, the reference triggering offset is a non-negative integer, a unit of the reference triggering offset is the time unit, and Y is predefined or configured or determined by a higher layer parameter.

In an embodiment, the reference time unit depending on the time unit to which the ending symbol of the time domain resource occupied by the first signaling belongs and the reference triggering offset includes: The time unit to which the ending symbol of the time domain resource occupied by the first signaling belongs is a first time unit, or the first time unit depends on the time unit to which the ending symbol of the time domain resource occupied by the first signaling belongs; the reference time unit is later than the first time unit, an offset between the reference time unit and the first time unit is equal to a first time offset, and the first time offset is equal to a sum of the reference triggering offset and a second time offset; and the second time offset is a non-negative integer, or the second time offset is a non-negative integer, and a unit of the reference triggering offset and a unit of the second time offset are both the time unit.

In an embodiment, the reference time unit depending on the time unit to which the ending symbol of the time domain resource occupied by the first signaling belongs and the reference triggering offset includes: The time unit to which the ending symbol of the time domain resource occupied by the first signaling belongs is a first time unit, or the first time unit depends on the time unit to which the ending symbol of the time domain resource occupied by the first signaling belongs; the reference time unit is later than the first time unit, an offset between the reference time unit and the first time unit is equal to a first time offset, the first time offset is equal to a sum of the reference triggering offset and a second time offset, the reference triggering offset is a non-negative integer, the second time offset is a non-negative integer, and a unit of the reference triggering offset and a unit of the second time offset are both the time unit; and the second time offset is equal to $\left⌊\left(\frac{{N}_{slot , offset , PDCCH}^{CA}}{{2}^{{μ}_{offset , PDCCH}}}-\frac{{N}_{slot , offset , CSIRS}^{CA}}{{2}^{{μ}_{offset , CSIRS}}}\right)⋅{2}^{{μ}_{CSIRS}}\right⌋$, where ${N}_{slot , offset , PDCCH}^{CA}$ and *µ*_{offset,PDCCH} are determined by a higher layer parameter *ca-SlotOffset* that is configured for a cell receiving the first signaling, and ${N}_{slot , offset , CSIRS}^{CA}$ and *µ*_{offset,CSIRS} are determined by a higher layer parameter *ca-SlotOffset* that is configured for a cell sending the CSI-RS in the first CSI-RS resource set.

In an embodiment, the reference time unit depending on the time unit to which the ending symbol of the time domain resource occupied by the first signaling belongs and the reference triggering offset includes: The time unit to which the ending symbol of the time domain resource occupied by the first signaling belongs is a first time unit *n*, or the first time unit *n* depends on the time unit to which the ending symbol of the time domain resource occupied by the first signaling belongs; and the reference time unit is $n + X + \left⌊\left(\frac{{N}_{slot , offset , PDCCH}^{CA}}{{2}^{{μ}_{offset , PDCCH}}}-\frac{{N}_{slot , offset , CSIRS}^{CA}}{{2}^{{μ}_{offset , CSIRS}}}\right)⋅{2}^{{μ}_{CSIRS}}\right⌋$ , where X is the reference triggering offset, the reference triggering offset is a non-negative integer, a unit of the reference triggering offset is the time unit, *µ_{CSIRS}* is a subcarrier spacing configuration of a CSI-RS in the first CSI-RS resource set, ${N}_{slot , offset , PDCCH}^{CA}$ and *µ*_{offset,PDCCH} are determined by a higher layer parameter *ca-SlotOffset* that is configured for a cell receiving the first signaling, and ${N}_{slot , offset , CSIRS}^{CA}$ and *µ*_{offset,CSIRS} are determined by a higher layer parameter *ca-SlotOffset* that is configured for a cell sending the CSI-RS in the first CSI-RS resource set.

In an embodiment, the first time unit depending on the time unit to which the time domain resource occupied by the first signaling belongs includes: When a subcarrier spacing of a CSI-RS in the first CSI-RS resource set is the same as a subcarrier spacing of the first signaling, the first time unit is the time unit to which the time domain resource occupied by the first signaling belongs.

In an embodiment, the first time unit depending on the time unit to which the time domain resource occupied by the first signaling belongs includes: When a subcarrier spacing of a CSI-RS in the first CSI-RS resource set is different from a subcarrier spacing of the first signaling, the first time unit depends on the time unit to which the time domain resource occupied by the first signaling belongs, the subcarrier spacing of the CSI-RS in the first CSI-RS resource set, and the subcarrier spacing of the first signaling.

In an embodiment, the first time unit depending on the time unit to which the time domain resource occupied by the first signaling belongs includes: When a subcarrier spacing of a CSI-RS in the first CSI-RS resource set is different from a subcarrier spacing of the first signaling, the first time unit is $\left⌊m⋅\frac{a}{b}\right⌋$, where m is the time unit to which the time domain resource occupied by the first signaling belongs, a is the subcarrier spacing of the CSI-RS in the first CSI-RS resource set, and b is the subcarrier spacing of the first signaling.

In an embodiment, the first time unit depending on the time unit to which the time domain resource occupied by the first signaling belongs includes: The first time unit is $\left⌊m⋅\frac{{2}^{{μ}_{CSIRS}}}{{2}^{{μ}_{PDCCH}}}\right⌋$, where m is the time unit to which the time domain resource occupied by the first signaling belongs, *µ_{CSIRS}* is a subcarrier spacing configuration of a CSI-RS in the first CSI-RS resource set, and *µ_{PDCCH}* is a subcarrier spacing configuration of the first signaling.

In an embodiment, the first time unit depending on the time unit to which the ending symbol of the time domain resource occupied by the first signaling belongs includes: When a subcarrier spacing of a CSI-RS in the first CSI-RS resource set is the same as a subcarrier spacing of the first signaling, the first time unit is the time unit to which the ending symbol of the time domain resource occupied by the first signaling belongs.

In an embodiment, the first time unit depending on the time unit to which the ending symbol of the time domain resource occupied by the first signaling belongs includes: When a subcarrier spacing of a CSI-RS in the first CSI-RS resource set is different from a subcarrier spacing of the first signaling, the first time unit depends on the time unit to which the ending symbol of the time domain resource occupied by the first signaling belongs, the subcarrier spacing of the CSI-RS in the first CSI-RS resource set, and the subcarrier spacing of the first signaling.

In an embodiment, the first time unit depending on the time unit to which the ending symbol of the time domain resource occupied by the first signaling belongs includes: When a subcarrier spacing of a CSI-RS in the first CSI-RS resource set is different from a subcarrier spacing of the first signaling, the first time unit is $\left⌊m⋅\frac{a}{b}\right⌋$, where m is the time unit to which the ending symbol of the time domain resource occupied by the first signaling belongs, a is the subcarrier spacing of the CSI-RS in the first CSI-RS resource set, and b is the subcarrier spacing of the first signaling.

In an embodiment, the first time unit depending on the time unit to which the ending symbol of the time domain resource occupied by the first signaling belongs includes: The first time unit is $\left⌊m⋅\frac{{2}^{{μ}_{CSIRS}}}{{2}^{{μ}_{PDCCH}}}\right⌋$, where m is the time unit to which the ending symbol of the time domain resource occupied by the first signaling belongs, *µ_{CSIRS}* is a subcarrier spacing configuration of a CSI-RS in the first CSI-RS resource set, and *µ_{PDCCH}* is a subcarrier spacing configuration of the first signaling.

### Embodiment 13

Embodiment 13 illustrates a structural block diagram of a processing apparatus used in a first node device according to an embodiment of this application, as shown in FIG. 13. In FIG. 13, a processing apparatus 1200 in the first node device includes a first receiver 1201 and a first transmitter 1202.

In an embodiment, the first node device is user equipment.

In an embodiment, the first node device is a relay node device.

In an embodiment, the first receiver 1201 includes at least one of {an antenna 452, a receiver 454, a reception processor 456, a multi-antenna reception processor 458, a controller/processor 459, a memory 460, and a data source 467} in Embodiment 4.

In an embodiment, the first transmitter 1202 includes at least one of {the antenna 452, a transmitter 454, a transmission processor 468, a multi-antenna transmission processor 457, the controller/processor 459, the memory 460, and the data source 467} in Embodiment 4.

The first receiver 1201 is configured to receive a first CSI reporting configuration, where the first CSI reporting configuration indicates a first CSI-RS resource set for channel measurement, and the first CSI-RS resource set includes a plurality of CSI-RS resources; the first CSI reporting configuration is used to configure CSI reporting for P ports, where P is a positive integer greater than 1; receive first signaling; and receive some or all CSI-RSs in the first CSI-RS resource set.

The first transmitter 1202 is configured to send first CSI, where the first signaling is used to trigger the first CSI, and the first CSI is the CSI for P ports configured by the first CSI reporting configuration.

In Embodiment 13, the first CSI-RS resource set belongs to at least one time unit in time domain, and the at least one time unit depends on a time domain resource occupied by the first signaling and at least one triggering offset; and the at least one triggering offset depends on whether P is greater than a quantity of ports of any CSI-RS resource in the first CSI-RS resource set.

In an embodiment, when P is equal to a quantity of ports of one CSI-RS resource in the first CSI-RS resource set, the first CSI indicates a first CSI-RS resource and the first CSI-RS resource is one CSI-RS resource in the first CSI-RS resource set. When P is greater than the quantity of ports of any CSI-RS resource in the first CSI-RS resource set, the first CSI indicates a first CSI-RS resource group, the first CSI-RS resource group includes a plurality of CSI-RS resources in the first CSI-RS resource set, and a total quantity of ports of all CSI-RS resources in the first CSI-RS resource group is equal to P.

In an embodiment, the at least one triggering offset depending on whether P is greater than the quantity of ports of any CSI-RS resource in the first CSI-RS resource set includes: When P is equal to the quantity of ports of one CSI-RS resource in the first CSI-RS resource set, the at least one triggering offset is a first triggering offset; when P is greater than the quantity of ports of any CSI-RS resource in the first CSI-RS resource set, the at least one triggering offset is a second triggering offset.

In an embodiment, the at least one triggering offset depending on whether P is greater than the quantity of ports of any CSI-RS resource in the first CSI-RS resource set includes: When P is equal to the quantity of ports of one CSI-RS resource in the first CSI-RS resource set, the at least one triggering offset is one triggering offset; when P is greater than the quantity of ports of any CSI-RS resource in the first CSI-RS resource set, the at least one triggering offset includes Q triggering offsets, where Q is a positive integer greater than 1.

In an embodiment, when P is greater than the quantity of ports of any CSI-RS resource in the first CSI-RS resource set, the first CSI-RS resource set includes Q CSI-RS resource groups, where any CSI-RS resource group in the Q CSI-RS resource groups includes a plurality of CSI-RS resources in the first CSI-RS resource set, a total quantity of ports of all CSI-RS resources in any CSI-RS resource group in the Q CSI-RS resource groups is equal to P, the at least one time unit includes time units to which the Q CSI-RS resource groups respectively belong in time domain, and the time units to which the Q CSI-RS resource groups respectively belong in time domain respectively depend on the Q triggering offsets.

In an embodiment, the at least one triggering offset depending on whether P is greater than the quantity of ports of any CSI-RS resource in the first CSI-RS resource set includes: When P is equal to the quantity of ports of one CSI-RS resource in the first CSI-RS resource set, the at least one triggering offset is one triggering offset; when P is greater than the quantity of ports of any CSI-RS resource in the first CSI-RS resource set, the at least one triggering offset includes M triggering offsets, where M is a positive integer greater than 1, the first CSI-RS resource set includes M CSI-RS resources, the at least one time unit includes time units to which the M CSI-RS resources respectively belong in time domain, and the time units to which the M CSI-RS resources respectively belong in time domain respectively depend on the M triggering offsets.

In an embodiment, a reference CSI-RS resource is one CSI-RS resource in the first CSI-RS resource set, the reference CSI-RS resource belongs to a reference time unit in time domain, and the at least one time unit includes the reference time unit; and the reference time unit depends on the time domain resource occupied by the first signaling and a reference triggering offset, and the at least one triggering offset includes the reference triggering offset.

### Embodiment 14

Embodiment 14 illustrates a structural block diagram of a processing apparatus used in a second node device according to an embodiment of this application, as shown in FIG. 14. In FIG. 14, a processing apparatus 1300 in the second node device includes a second transmitter 1301 and a second receiver 1302.

In an embodiment, the second node device is a base station.

In an embodiment, the second node device is user equipment.

In an embodiment, the second node device is a relay node device.

In an embodiment, the second transmitter 1301 includes at least one of {an antenna 420, a transmitter 418, a transmission processor 416, a multi-antenna transmission processor 471, a controller/processor 475, and a memory 476} in Embodiment 4.

In an embodiment, the second receiver 1302 includes at least one of {the antenna 420, a receiver 418, a reception processor 470, a multi-antenna reception processor 472, the controller/processor 475, and the memory 476} in Embodiment 4.

The second transmitter 1301 is configured to send a first CSI reporting configuration, where the first CSI reporting configuration indicates a first CSI-RS resource set for channel measurement, and the first CSI-RS resource set includes a plurality of CSI-RS resources; the first CSI reporting configuration is used to configure CSI reporting for P ports, where P is a positive integer greater than 1; send first signaling; and send some or all CSI-RSs in the first CSI-RS resource set.

The second receiver 1302 is configured to receive first CSI, where the first signaling is used to trigger the first CSI, and the first CSI is the CSI for P ports configured by the first CSI reporting configuration.

In Embodiment 14, the first CSI-RS resource set belongs to at least one time unit in time domain, and the at least one time unit depends on a time domain resource occupied by the first signaling and at least one triggering offset; and the at least one triggering offset depends on whether P is greater than a quantity of ports of any CSI-RS resource in the first CSI-RS resource set.

In an embodiment, when P is equal to a quantity of ports of one CSI-RS resource in the first CSI-RS resource set, the first CSI indicates a first CSI-RS resource and the first CSI-RS resource is one CSI-RS resource in the first CSI-RS resource set. When P is greater than the quantity of ports of any CSI-RS resource in the first CSI-RS resource set, the first CSI indicates a first CSI-RS resource group, the first CSI-RS resource group includes a plurality of CSI-RS resources in the first CSI-RS resource set, and a total quantity of ports of all CSI-RS resources in the first CSI-RS resource group is equal to P.

In an embodiment, the at least one triggering offset depending on whether P is greater than the quantity of ports of any CSI-RS resource in the first CSI-RS resource set includes: When P is equal to the quantity of ports of one CSI-RS resource in the first CSI-RS resource set, the at least one triggering offset is a first triggering offset; when P is greater than the quantity of ports of any CSI-RS resource in the first CSI-RS resource set, the at least one triggering offset is a second triggering offset.

In an embodiment, the at least one triggering offset depending on whether P is greater than the quantity of ports of any CSI-RS resource in the first CSI-RS resource set includes: When P is equal to the quantity of ports of one CSI-RS resource in the first CSI-RS resource set, the at least one triggering offset is one triggering offset; when P is greater than the quantity of ports of any CSI-RS resource in the first CSI-RS resource set, the at least one triggering offset includes Q triggering offsets, where Q is a positive integer greater than 1.

In an embodiment, when P is greater than the quantity of ports of any CSI-RS resource in the first CSI-RS resource set, the first CSI-RS resource set includes Q CSI-RS resource groups, where any CSI-RS resource group in the Q CSI-RS resource groups includes a plurality of CSI-RS resources in the first CSI-RS resource set, a total quantity of ports of all CSI-RS resources in any CSI-RS resource group in the Q CSI-RS resource groups is equal to P, the at least one time unit includes time units to which the Q CSI-RS resource groups respectively belong in time domain, and the time units to which the Q CSI-RS resource groups respectively belong in time domain respectively depend on the Q triggering offsets.

In an embodiment, the at least one triggering offset depending on whether P is greater than the quantity of ports of any CSI-RS resource in the first CSI-RS resource set includes: When P is equal to the quantity of ports of one CSI-RS resource in the first CSI-RS resource set, the at least one triggering offset is one triggering offset; when P is greater than the quantity of ports of any CSI-RS resource in the first CSI-RS resource set, the at least one triggering offset includes M triggering offsets, where M is a positive integer greater than 1, the first CSI-RS resource set includes M CSI-RS resources, the at least one time unit includes time units to which the M CSI-RS resources respectively belong in time domain, and the time units to which the M CSI-RS resources respectively belong in time domain respectively depend on the M triggering offsets.

In an embodiment, a reference CSI-RS resource is one CSI-RS resource in the first CSI-RS resource set, the reference CSI-RS resource belongs to a reference time unit in time domain, and the at least one time unit includes the reference time unit; and the reference time unit depends on the time domain resource occupied by the first signaling and a reference triggering offset, and the at least one triggering offset includes the reference triggering offset.

A person of ordinary skill in the art may understand that all or some steps of the foregoing methods may be implemented by a program instructing relevant hardware. The program may be stored in a computer-readable storage medium, such as a read-only memory, a hard disk, or an optical disc. Optionally, all or some steps in the foregoing embodiments may alternatively be implemented by using one or more integrated circuits. Correspondingly, the modules and units in the foregoing embodiments may be implemented in a form of hardware, or may be implemented in a form of a software functional module. This application is not limited to any specific form of a combination of software and hardware. The user equipment, the terminal, and the UE in this application include but are not limited to wireless communication devices such as a drone, a communication module on a drone, a remote-controlled aircraft, a flight vehicle, a small aircraft, a mobile phone, a tablet computer, a notebook computer, a vehicle-mounted communication device, a wireless sensor, a USB dongle, an internet of things terminal, an RFID terminal, an NB-IOT terminal, an MTC (Machine Type Communication, machine type communication) terminal, an eMTC (enhanced MTC, enhanced MTC) terminal, a data card, a USB dongle, a vehicle-mounted communication device, a low-cost mobile phone, and a low-cost tablet computer. The base station or system device in this application includes but is not limited to a wireless communication device such as a macro cellular base station, a micro cellular base station, a home base station, a relay base station, a gNB (NR NodeB) NR NodeB, or a TRP (Transmitter Receiver Point, transmission reception point).

The foregoing descriptions are merely example embodiments of this application, and are not intended to limit the protection scope of this application. Any changes and modifications made based on the embodiments described in the specification should be considered obvious and fall within the protection scope of this application, provided that these changes and modifications can achieve some or all similar technical effects.

## Claims

1. A first node device used for wireless communication, comprising:
a first receiver, configured to receive a first CSI reporting configuration, wherein the first CSI reporting configuration indicates a first CSI-RS resource set for channel measurement, and the first CSI-RS resource set comprises a plurality of CSI-RS resources; the first CSI reporting configuration is used to configure CSI reporting for P ports, wherein P is a positive integer greater than 1; receive first signaling; and receive some or all CSI-RSs in the first CSI-RS resource set; and
a first transmitter, configured to send first CSI, wherein the first signaling is used to trigger the first CSI, and the first CSI is the CSI for P ports configured by the first CSI reporting configuration, wherein
the first CSI-RS resource set belongs to at least one time unit in time domain, and the at least one time unit depends on a time domain resource occupied by the first signaling and at least one triggering offset; and the at least one triggering offset depends on whether P is greater than a quantity of ports of any CSI-RS resource in the first CSI-RS resource set.

2. The first node device according to claim 1, wherein when P is equal to a quantity of ports of one CSI-RS resource in the first CSI-RS resource set, the first CSI indicates a first CSI-RS resource, and the first CSI-RS resource is one CSI-RS resource in the first CSI-RS resource set; when P is greater than the quantity of ports of any CSI-RS resource in the first CSI-RS resource set, the first CSI indicates a first CSI-RS resource group, wherein the first CSI-RS resource group comprises a plurality of CSI-RS resources in the first CSI-RS resource set, and a total quantity of ports of all CSI-RS resources in the first CSI-RS resource group is equal to P.

3. The first node device according to claim 1 or 2, wherein that the at least one triggering offset depends on whether P is greater than the quantity of ports of any CSI-RS resource in the first CSI-RS resource set comprises: when P is equal to the quantity of ports of one CSI-RS resource in the first CSI-RS resource set, the at least one triggering offset is a first triggering offset; when P is greater than the quantity of ports of any CSI-RS resource in the first CSI-RS resource set, the at least one triggering offset is a second triggering offset.

4. The first node device according to claim 1 or 2, wherein that the at least one triggering offset depends on whether P is greater than the quantity of ports of any CSI-RS resource in the first CSI-RS resource set comprises: when P is equal to the quantity of ports of one CSI-RS resource in the first CSI-RS resource set, the at least one triggering offset is one triggering offset; when P is greater than the quantity of ports of any CSI-RS resource in the first CSI-RS resource set, the at least one triggering offset comprises Q triggering offsets, wherein Q is a positive integer greater than 1.

5. The first node device according to claim 4, wherein when P is greater than the quantity of ports of any CSI-RS resource in the first CSI-RS resource set, the first CSI-RS resource set comprises Q CSI-RS resource groups, wherein any CSI-RS resource group in the Q CSI-RS resource groups comprises a plurality of CSI-RS resources in the first CSI-RS resource set, a total quantity of ports of all CSI-RS resources in any CSI-RS resource group in the Q CSI-RS resource groups is equal to P, the at least one time unit comprises time units to which the Q CSI-RS resource groups respectively belong in time domain, and the time units to which the Q CSI-RS resource groups respectively belong in time domain respectively depend on the Q triggering offsets.

6. The first node device according to claim 1 or 2, wherein that the at least one triggering offset depends on whether P is greater than the quantity of ports of any CSI-RS resource in the first CSI-RS resource set comprises: when P is equal to the quantity of ports of one CSI-RS resource in the first CSI-RS resource set, the at least one triggering offset is one triggering offset; when P is greater than the quantity of ports of any CSI-RS resource in the first CSI-RS resource set, the at least one triggering offset comprises M triggering offsets, wherein M is a positive integer greater than 1, the first CSI-RS resource set comprises M CSI-RS resources, the at least one time unit comprises time units to which the M CSI-RS resources respectively belong in time domain, and the time units to which the M CSI-RS resources respectively belong in time domain respectively depend on the M triggering offsets.

7. The first node device according to any one of claims 1 to 6, wherein a reference CSI-RS resource is one CSI-RS resource in the first CSI-RS resource set, the reference CSI-RS resource belongs to a reference time unit in time domain, and the at least one time unit comprises the reference time unit; and the reference time unit depends on the time domain resource occupied by the first signaling and a reference triggering offset, and the at least one triggering offset comprises the reference triggering offset.

8. A second node device used for wireless communication, comprising:
a second transmitter, configured to send a first CSI reporting configuration, wherein the first CSI reporting configuration indicates a first CSI-RS resource set for channel measurement, and the first CSI-RS resource set comprises a plurality of CSI-RS resources; the first CSI reporting configuration is used to configure CSI reporting for P ports, wherein P is a positive integer greater than 1; send first signaling; and send some or all CSI-RSs in the first CSI-RS resource set; and
a second receiver, configured to receive first CSI, wherein the first signaling is used to trigger the first CSI, and the first CSI is the CSI for P ports configured by the first CSI reporting configuration, wherein
the first CSI-RS resource set belongs to at least one time unit in time domain, and the at least one time unit depends on a time domain resource occupied by the first signaling and at least one triggering offset; and the at least one triggering offset depends on whether P is greater than a quantity of ports of any CSI-RS resource in the first CSI-RS resource set.

9. A method in a first node used for wireless communication, comprising:
receiving a first CSI reporting configuration, wherein the first CSI reporting configuration indicates a first CSI-RS resource set for channel measurement, and the first CSI-RS resource set comprises a plurality of CSI-RS resources; the first CSI reporting configuration is used to configure CSI reporting for P ports, wherein P is a positive integer greater than 1;
receiving first signaling;
receiving some or all CSI-RSs in the first CSI-RS resource set; and
sending first CSI, wherein the first signaling is used to trigger the first CSI, and the first CSI is the CSI for P ports configured by the first CSI reporting configuration, wherein
the first CSI-RS resource set belongs to at least one time unit in time domain, and the at least one time unit depends on a time domain resource occupied by the first signaling and at least one triggering offset; and the at least one triggering offset depends on whether P is greater than a quantity of ports of any CSI-RS resource in the first CSI-RS resource set.

10. A method in a second node used for wireless communication, comprising:
sending a first CSI reporting configuration, wherein the first CSI reporting configuration indicates a first CSI-RS resource set for channel measurement, and the first CSI-RS resource set comprises a plurality of CSI-RS resources; the first CSI reporting configuration is used to configure CSI reporting for P ports, wherein P is a positive integer greater than 1;
sending first signaling;
sending some or all CSI-RSs in the first CSI-RS resource set; and
receiving first CSI, wherein the first signaling is used to trigger the first CSI, and the first CSI is the CSI for P ports configured by the first CSI reporting configuration, wherein
the first CSI-RS resource set belongs to at least one time unit in time domain, and the at least one time unit depends on a time domain resource occupied by the first signaling and at least one triggering offset; and the at least one triggering offset depends on whether P is greater than a quantity of ports of any CSI-RS resource in the first CSI-RS resource set.
